(19) Europäisches Patentamt
European Patent Office
Office européen des brevets

(11) Veröffentlichungsnummer: **0 266 714**
**B1**

(12) # EUROPÄISCHE PATENTSCHRIFT

(45) Veröffentlichungstag der Patentschrift: **19.09.90**

(51) Int. Cl.$^5$: **C09B 62/09**, C09B 62/513, D06P 1/38

(21) Anmeldenummer: **87116058.6**

(22) Anmeldetag: **31.10.87**

(54) **Wasserlösliche Azoverbindungen, Verfahren zu ihrer Herstellung und ihre Verwendung als Farbstoffe.**

(30) Priorität: **03.11.86 DE 3637337**

(43) Veröffentlichungstag der Anmeldung:
**11.05.88 Patentblatt 88/19**

(45) Bekanntmachung des Hinweises auf die Patenterteilung:
**19.09.90 Patentblatt 90/38**

(84) Benannte Vertragsstaaten:
**BE CH DE ES FR GB IT LI**

(56) Entgegenhaltungen:
**GB-A- 2 008 144**
**GB-A- 2 008 145**
**GB-A- 2 159 829**

(73) Patentinhaber: **HOECHST AKTIENGESELLSCHAFT, Postfach 80 03 20, D-6230 Frankfurt am Main 80(DE)**

(72) Erfinder: **Schläfer, Ludwig, Dr., Königsberger Strasse 40, D-6233 Kelkheim (Taunus)(DE)**
Erfinder: **Springer, Hartmut, Dr., Am Erdbeerstein 27, D-6240 Königstein/Taunus(DE)**
Erfinder: **Hähnle, Reinhard, Dr., Kastanienweg 7a, D-6240 Königstein/Taunus(DE)**

**EP 0 266 714 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt auf dem technischen Gebiet der Textilfarbstoffe.

Cellulosefasern und Polyesterfasern können derzeit gemeinsam wegen ihrer unterschiedlichen chemischen Natur nicht mit ein und demselben Farbstoff einheitlich und gleichmäßig gefärbt werden. Man ist gezwungen, gemischte Materialien aus diesen beiden Faserarten, wie beispielsweise zu färben, nämlich zunächst die eine Faserart mit dem für diese geeigneten Farbstoff, sodann die andere Faserart mit dem für diese zweite Faserart geeigneten Farbstoff, jeweils unter Anwendung unterschiedlicher Verfahrensbedingungen. Solch eine Verfahrensweise ist notwendigerweise langwierig und ersatzbedürftig. Man hat deshalb versucht, solche Mischfasermaterialien unter Verwendung eines Farbstoffgemisches aus einem faserreaktiven Farbstoff zur Anfärbung des Cellulosefaseranteils und einem Dispersionsfarbstoff zur Anfärbung des Polyesterfaseranteils zu färben. Diese Verfahrensweise hat jedoch deutliche Nachteile. Der Grund liegt darin, daß faserreaktive Farbstoffe üblicherweise im alkalischen Medium auf der Cellulosefaser fixieren und Dispersionsfarbstoffe üblicherweise, wie in gewissem Umfange auch die Polyesterfaser, gegen Alkali empfindlich sind. Die Folge ist demgemäß, daß bei der Fixierung der faserreaktiven Farbstoffe im alkalischen Milieu die gleichzeitig vorhandenen Dispersionsfarbstoffe und gegebenenfalls auch die Polyesterfasern geschädigt werden können.

Es bestand somit die Aufgabe, diese bisher bekannten Nachteile zu reduzieren oder gar zu beheben, zumal das Färben von Mischgeweben, wie beispielsweise solchen aus Cellulose- und Polyesterfasern, zunehmend an Bedeutung gewinnt. Somit besteht auch verstärkt ein Interesse an Farbstoffen, die das Färben von solchen Mischgeweben problemloser machen, so insbesondere an faserreaktiven Farbstoffen, die im nicht-alkalischen Bereich auf der Cellulosefaser zu fixieren vermögen und zudem bei möglichst niedrigen Färbetemperaturen angewendet werden können.

So hat man mit der deutschen Offenlegungsschrift Nr. 2 634 308 und der US-PS 4 300 902 Farbstoffe zum Färben von solchen Mischfasermaterialien vorgeschlagen, die eine oder mehrere s-Triazinylgruppen mit einem quaternären Stickstoffsubstituenten, wie einen Pyridiniumrest, zum Beispiel der Nicotinsäure, enthalten, und später gemäß der US-Patentschrift Nr. 4 453 945 Farbstoffe gleichen Typs mit speziell dem Nicotinsäurerest als quaternären Stickstoffsubstituenten zum Färben von Cellulosefasern und Cellulose/Polyester-Mischfasern angewendet. Diese Farbstoffe bzw. die hierfür anzuwendenden Färbeverfahren haben jedoch Nachteile. Während für die Farbstoffe der deutschen Offenlegungsschrift Nr. 2 634 308 und der US-PS 4 300 902 Färbetemperaturen von über 150°C erforderlich sind, dagegen das Färbeverfahren der US-Patentschrift Nr. 4 453 945 nach den dortigen Angaben mit Färbetemperaturen unterhalb 150°C auskommt, so zeigen doch die in diesen drei Druckschriften genannten Farbstoffe den schwerwiegenden Nachteil, daß ihre Farbausbeute beim Einsatz nach den Ausziehverfahren auf Cellulosefasermaterialien, wie Baumwolle, stark vom pH-Wert des Färbebades abhängig ist. Dies bedeutet, daß die Tiefe der Ausfärbungen mit diesen bekannten Farbstoffen auf Baumwollfasern bei pH-Werten zwischen 4 und 8 recht unterschiedlich ist, wobei im allgemeinen gilt, daß die Farbtiefe mit steigendem pH-Wert zunimmt und deren Maximum, wie bei allen klassischen faserreaktiven Farbstoffen, im stark alkalischen Bereich, somit oberhalb von pH gleich 9 oder gar 10, liegt. Darüberhinaus ist der Aufbau der Färbungen mit diesen Farbstoffen, d.h. die Relation zwischen eingesetzter Farbstoffmenge und erhaltener Farbausbeute auf der Cellulosefaser (Farbstärke oder Farbtiefe) unzureichend, da die Farbausbeute auf der Faser sich von bestimmten Farbstoffkonzentrationen im Färbebad an mit Erhöhung der Farbstoffmenge zum Zwecke größerer Farbtiefen nicht mehr erhöht.

Diese Mängel haften ebenfalls den in der europäischen Patentanmeldungs-Veröffentlichung Nr. 0 167 219A beschriebenen Farbstoffen, die neben einem pyridiniumsubstituierten s-Triazinylrest eine faserreaktive Gruppe des Vinylsulfonyltyps enthalten, an.

Mit der vorliegenden Erfindung wurden nunmehr neue wasserlösliche Verbindungen gefunden, die der nachstehend genannten und definierten allgemeinen Formel (1) entsprechen, faserreaktive Eigenschaften besitzen und sich nicht nur mit Vorteil im alkalischen Bereich zum Färben von Cellulosefasern anwenden lassen, sondern die überraschenderweise auf Cellulosefasern bereits im schwach sauren und neutralen Bereich, nämlich unter den Bedingungen des sogenannten Hochtemperatur-Neutral-Färbeverfahrens (HTN-Verfahren) bei Temperaturen zwischen 100 und 150°C und einem pH-Wert zwischen 4 und 8 in wäßrigem Medium, somit unter Bedingungen des Färbens von Polyesterfasern, zu fixieren vermögen. Durch die Auffindung der neuen Farbstoffe der allgemeinen Formel (1) eröffnet sich die Möglichkeit, die bisher üblichen und gebräuchlichen Dispersionsfarbstoffe zusammen mit diesen neuen Farbstoffen in einstufige Färbeverfahren zur Färbung von Cellulose/Polyester-Fasergemischen einzusetzen, in welchen beide Faserkomponenten gleichmäßig und echt durch die jeweilige Farbstoffart angefärbt werden und Ton-in-Ton-Färbungen erhalten werden können, wenn der angewendete Dispersionsfarbstoff die gleiche Nuance wie der faserreaktive Farbstoff besitzt.

Die neuen faserreaktiven Verbindungen besitzen die allgemeine Formel (1)

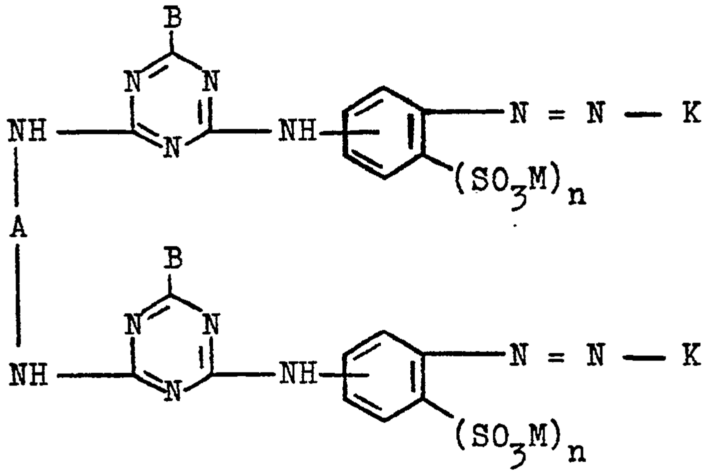

(1)

in welcher die verschiedenen Formelglieder die folgenden Bedeutungen besitzen:
A ist ein Phenylenrest, bevorzugt para-Phenylenrest, der durch 1 oder 2 Substituenten aus der Gruppe Alkoxy von 1 bis 4 C-Atomen, wie Methoxy und Ethoxy, Alkyl von 1 bis 4 C-Atomen, wie Methyl und Ethyl, Chlor, Sulfo und Carboxy, bevorzugt durch eine Sulfogruppe, substituiert sein kann, oder
A ist ein Rest der allgemeinen Formel (2)

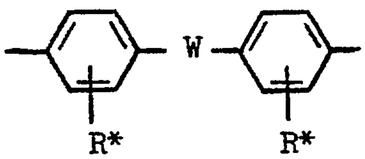

(2)

in welcher
W eine direkte Bindung oder der Vinylidenrest der Formel -CH=CH- oder der bivalente Harnstoffrest der Formel -NH-CO-NH- ist und
R* jedes, zueinander gleich oder voneinander verschieden, bevorzugt zueinander gleich, ein Wasserstoffatom, eine Sulfo-, Carboxy-, Methyl, Ethyl-, Methoxy- oder Ethoxygruppe, bevorzugt eine Sulfogruppe, bedeutet;
B ist ein Pyridiniumrest der allgemeinen Formel (3)

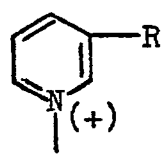

(3)

in welcher
R die Carboxygruppe oder die Carbonamidgruppe ist;
M ist ein Wasserstoffatom oder ein Alkalimetall, wie Natrium, Kalium oder Lithium;
n steht für die Zahl Null oder 1 (wobei im Falle n = 0 diese Gruppe ein Wasserstoffatom bedeutet);
K ist ein Rest der allgemeinen Formel (4), (5), (6), (7) oder (8)

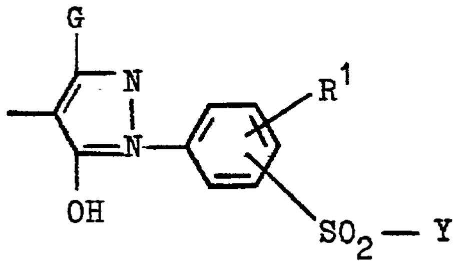
(4)

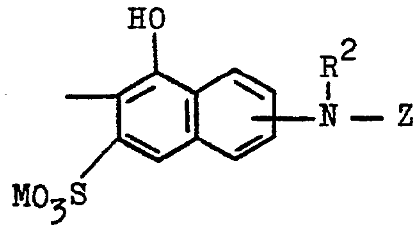
(5)

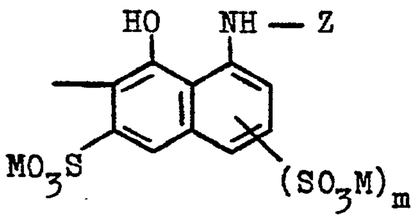
(6)

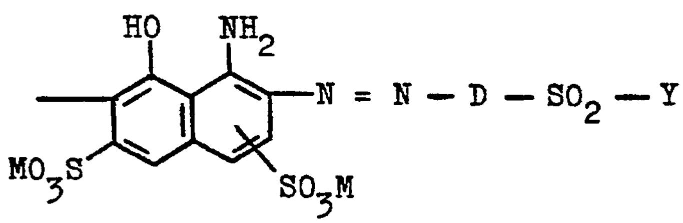
(7)

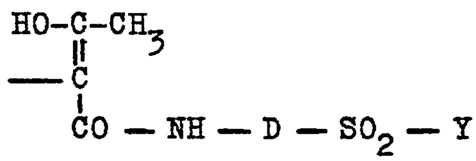
(8)

in welchen bedeuten:

D ist ein Phenylenrest, der durch 1 oder 2 Substituenten aus der Gruppe Chlor, Brom, Alkyl von 1 bis 4 C-Atomen, wie Methyl, Alkoxy von 1 bis 4 C-Atomen, wie Methoxy und Ethoxy, Carboxy und Sulfo substituiert sein kann, oder ist ein Naphthylenrest, wie insbesondere ein in 2-Stellung mit der Azogruppe verbundener Naphthylenrest, der durch 1 oder 2 Sulfogruppen substituiert sein kann;

$R^1$ ist ein Wasserstoffatom, ein Chloratom, eine Alkylgruppe von 1 bis 4 C-Atomen, wie die Methylgruppe, oder eine Alkoxygruppe von 1 bis 4 C-Atomen, wie die Methoxygruppe, bevorzugt jedoch ein Wasserstoffatom;

$R^2$ ist ein Wasserstoffatom oder eine Alkylgruppe von 1 bis 4 C-Atomen, wie vorzugsweise die Methylgruppe;

G ist eine Carboxy-, Methyl- oder Carbalkoxygruppe von 2 bis 5 C-Atomen, wie die Carbomethoxy- oder Carbethoxygruppe, bevorzugt die Methyl- oder Carboxygruppe;

Y ist eine Vinyl-, β-Sulfatoethyl- oder β-Chlorethyl-Gruppe, bevorgzugt die Vinyl- und insbesondere die β-Sulfatoethyl-Gruppe;

M hat die obengenannte Bedeutung;

m steht für die Zahl Null oder 1 (wobei im Falle m = 0 diese Gruppe ein Wasserstoffatom bedeutet);

die eine Gruppe $-SO_3M$ in Formel (6) steht in meta- oder para-Stellung zur Gruppe -NH-Z gebunden;

Z ist der α- oder β-Brom-acryloyl-Rest oder der β-Chlor-propionyl-, β-Chlorethylsulfonyl-benzoyl- oder (β-Chlorethylsulfonyl-methyl)-benzoyl-Rest oder ein Rest der allgemeinen Formel (9)

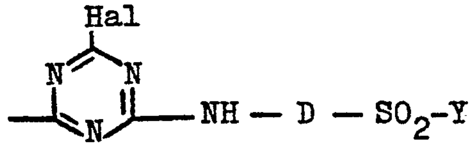 (9)

in welcher D und Y die obengenannten, insbesondere bevorzugten Bedeutungen haben und Hal für ein Chlor-oder Fluoratom, bevorzugt Chloratom, steht;
eine der Sulfo-, Sulfato- und Carboxygruppen bildet ein zum Pyridiniumkation äquivalentes Anion.

Die einzelnen Formelglieder können zueinander gleich oder voneinander verschiedene Bedeutungen haben. Insbesondere können die jeweils zweifach auftretenden Formelglieder eine zueinander gleiche oder eine voneinander verschiedene Bedeutung haben; bevorzugt haben die Formelrestpaare B, R', M und K jeweils eine zueinander gleich Bedeutung.

In den allgemeinen Formeln (7), (8) und (9) ist D bevorzugt ein unsubstituierter oder ein durch die hierfür genannten Substituenten substituierter Phenylenrest. Die faserreaktive Gruppe der Formel $-SO_2-Y$ ist in den allgemeinen Formeln (4), (7), (8) und (9) an den Benzolkern bevorzugt in meta- oder para-Stellung zum Stickstoffatom des Pyrazolons bzw. der Amino-, Azo- oder Amidgruppe gebunden.

Im vorstehenden sowie im nachstehenden bedeuten Sulfogruppen Gruppen entsprechend der allgemeinen Formel $-SO_3M$ mit M der obengenannten Bedeutung, des weiteren Carboxygruppen Gruppen der allgemeinen Formel -COOM und Sulfatogruppen Gruppen der allgemeinen Formel $-OSO_3M$ , jeweils mit M der obengenannten Bedeutung.

Die erfindungsgemäßen Azoverbindungen können in Form ihrer freien Säure und bevorzugt in Form ihrer Alkalisalze, insbesondere der neutralen Salze, vorliegen. Sie finden bevorzugt in Form dieser Salze ihre Verwendung zum Färben und Bedrucken von hydroxy- und/oder carbonamidgruppenhaltigen Fasermaterialien.

Der Formelrest A ist bevorzugt der gegebenenfalls durch eine Sulfogruppe substituierte p-Phenylenrest, der 2,2'-oder 3,3'-Disulfo-diphen-4,4'-ylen-Rest oder ein Rest der Formel (10a), (10b) oder (10c)

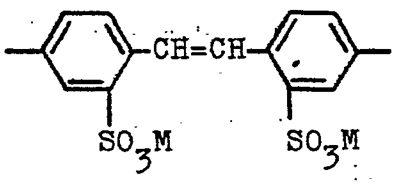 (10a) 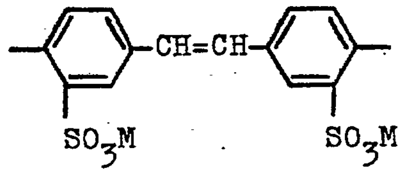 (10b)

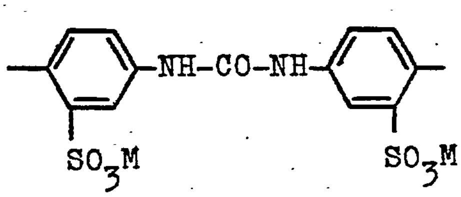 (10c)

mit M der obengenannten Bedeutung. Bevorzugt ist weiterhin der mit der Azogruppe und dem Triazinrest verbundene Sulfophenylamino-Rest ein Rest der allgemeinen Formel (10d)

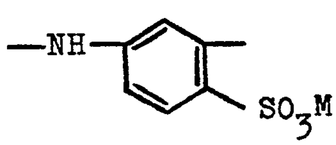 (10d)

mit M der obengenannten Bedeutung. Von den Resten K ist bevorzugt der 1-(4'-β-Sulfatoethylsulfonyl)-phenyl-3-methyl- und -3-carboxy-pyrazol-5-on-Rest, desweiteren der 6- und 7-(3'-β-Chlorethylsulfonyl)-benzoylamino-3-sulfo-1-hydroxy-naphth-2 yl-Rest, der 6- und 7-(4'-β-Chlorethylsulfonyl-methyl)-benzoylamino-3-sulfo-1-hydroxy-n phth-2-yl-Rest, der 8-(3'-β-Chlorethylsulfonyl)-benzoylamino-3,6-disulfo-naphth-2-yl-Re t, der 6-[2'-(3"-β-Sulfatoethylsulfonyl-phenylamino)-4'-chlor-s-tr azin-6'-yl]-amino-3-sulfo-1-hydroxy-naphth-2-yl- und der 8-[2"-(3'-β-Sulfatoethylsulfonyl-phenylamino)-4"-chlor-s-tr azin-6"-yl]-amino-3,6-disulfo-1-hydroxy-naphth-2-yl -Rest.

Von den erfindungsgemäßen Azoverbindungen können insbesondere diejenigen hervorgehoben werden, die der allgemeinen Formel (1a)

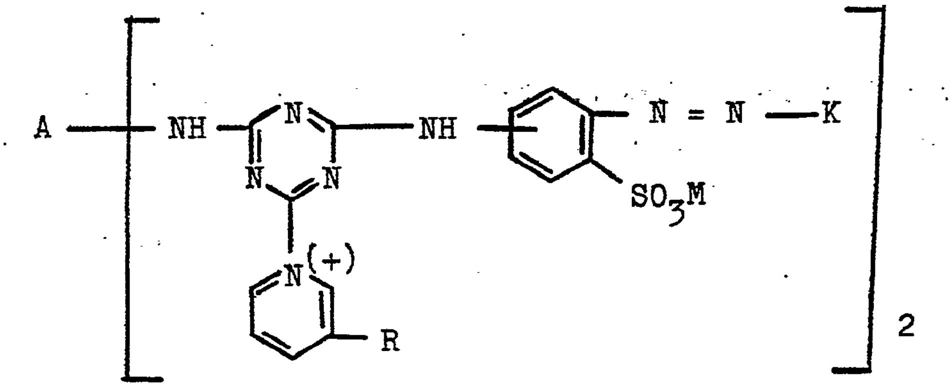

(1a)

entsprechen, in welcher M und R die obengenannten Bedeutungen haben, A für den 1,4-Phenylen- oder den 2,2'-Disulfo-stilben-4,4'-ylen-Rest steht und K einen Rest der allgemeinen Formel (11a), (11b) oder (11c)

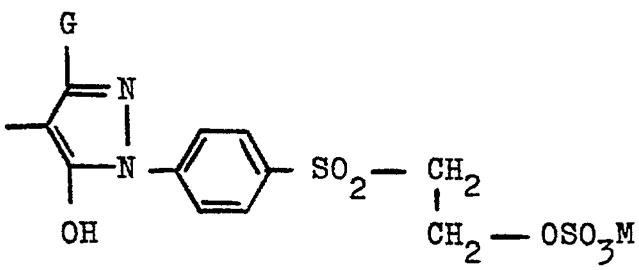

(11a)

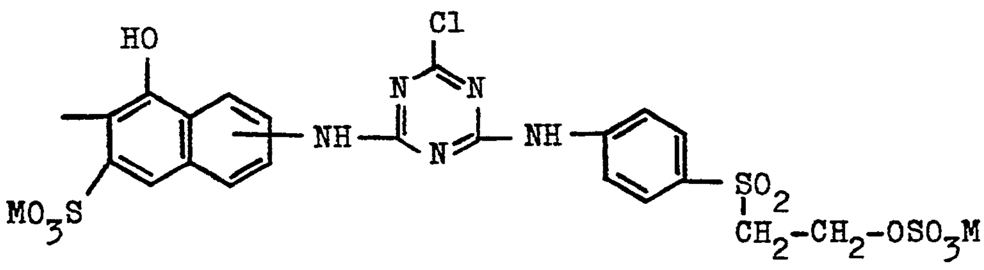

(11b)

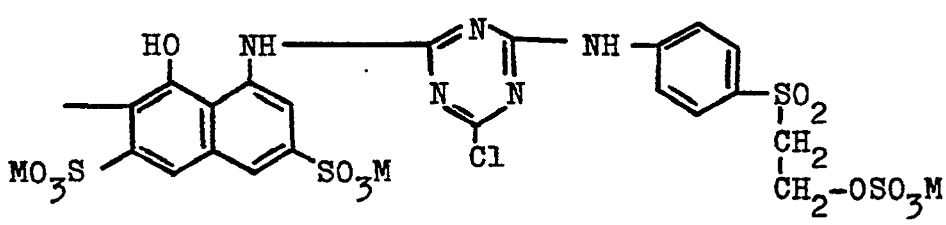

(11c)

bedeutet, in welchen M die obengenannte Bedeutung besitzt und G für die Methyl- oder Carboxygruppe steht und in Formle (11b) die Chlortriazinylamino-Gruppierung in 6- oder 7-Stellung des 1-Hydroxy-3-sulfo-naphthyl-Restes gebunden ist.

Die vorligende Erfindung betrifft weiterhin Verfahren zur Herstellung der Azoverbindungen der allgemeinen Formel (1). Diese sind dadurch gekennzeichnet, daß man

a) eine aromatische Aminoverbindung der allgemeinen Formel (12)

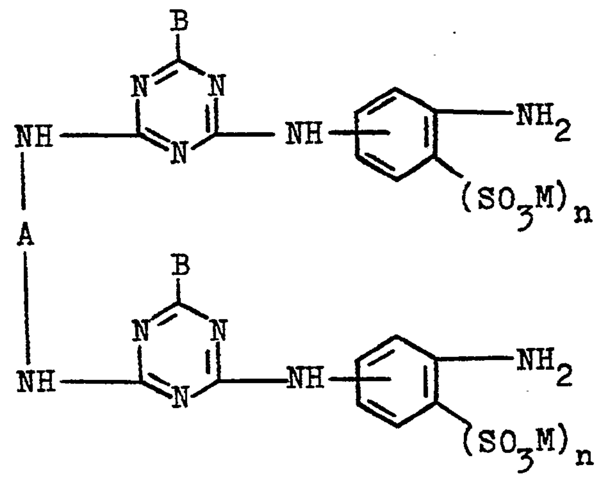

(12)

in welcher A, B, M und n die obengenannten Bedeutungen haben, zweifach diazotiert (tetrazotiert) und mit einer Kupplungskomponente der allgemeinen Formel (13)

H — K (13)

in welcher K die obegenannte Bedeutung besitzt, oder mit zwei verschiedenen Kupplungskomponenten der allgemeinen Formel (13) in äquivalenter Menge kuppelt, oder

b) daß man eine Disazoverbindung der allgemeinen Formel (14)

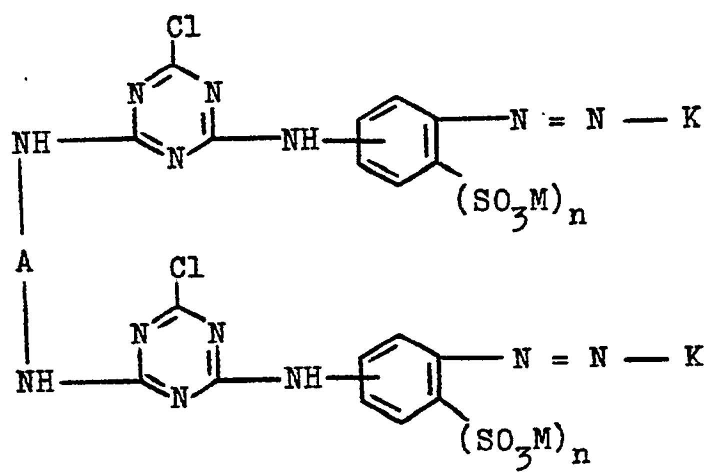

(14)

in welcher A, K, M und die obengenannten Bedeutungen haben, mit Nicotinsäure oder Nicotinsäureamid umsetzt.

Die erfindungsgemäßen Verfahrensweisen zur Herstellung der neuen Azoverbindungen (1) können analog für den jeweiligen Reaktionstyp üblichen und bekannten Verfahrensmaßnahmen und -bedingungen ausgeführt werden. Solche Verfahrensmaßnahmen sind beispielsweise für die Verfahrensvariante b) in der bereits anfangs genannten europäischen Patentanmeldungs-Veröffentlichung Nr. 0 167 219 A erwähnt; bevorzugt erfolgt die Umsetzung in wäßrigem Medium bei einem pH-Wert zwischen 4 und 6, insbesondere zwischen 4 und 5, und bevorzugt bei einer Temperatur zwischen 60 und 100°C, bevorzugt zwischen 80 und 90°C.

Bei der erfindungsgemäßen Verfahrensvariante a) erfolgt die Diazotierung (Tetrazotierung) und Kupplung ebenso in den lang bekannten und üblichen Verfahrensweisen, so beispielsweise die Diazotierung durch Umsetzung mit salpetriger Säure in einem wäßrig-sauren Medium, wie bei einer Temperatur zwischen -5°C und +10°C und bei einem pH-Wert zwischen 0 und 2, und die Kupplungsreaktionen beispielsweise in wäßrigem Medium bei einer Temperatur zwischen -5°C und +30°C und bei einem pH-Wert zwischen 3 und 8, bevorzugt 3 und 7.

Die Ausgangsverbindungen der allgemeinen Formel (12) selbst lassen sich in erfindungsgemäßer Weise herstellen, indem man eine Verbindung der allgemeinen Formel (15)

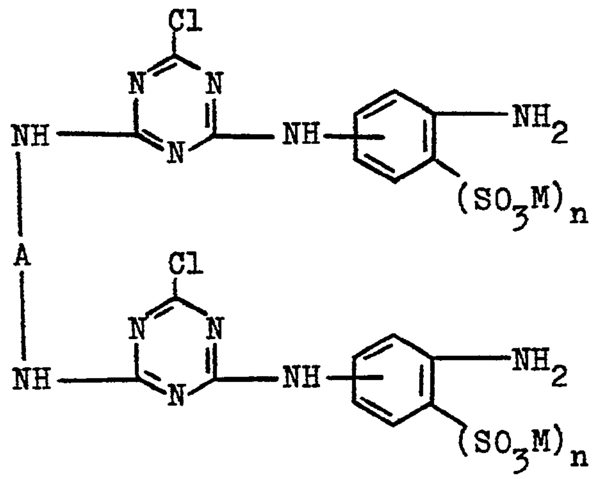

(15)

in welcher A, M und n die obengenannten Bedeutungen haben, mit Nicotinsäure oder Nicotinsäureamid umsetzt, so beispielsweise in wäßrigem Medium bei einem pH-Wert zwischen 4 und 8 und einer Temperatur zwischen 60 und 110°C.

Die Ausgangsverbindungen der allgemeinen Formel (14) können in an und für sich bekannter Verfahrensweise durch Umsetzung von Chlortriazin mit einer Amino-Azoverbindung der allgemeinen Formel (16)

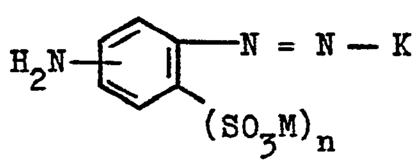

(16)

in welcher K, M und n die obengenannten Bedeutungen haben, und mit einer Diaminoverbindung der allgemeinen Formel $H_2N$-A-$NH_2$, in welcher A die obengenannte Bedeutung besitzt, hergestellt werden.

Die Augangsverbindungen der allgemeinen Formel (15) lassen sich in ähnlicher Weise durch Umsetzung von Chlortriazin mit einer Phenylen-diamin-Verbindung der allgemeinen Formel (17)

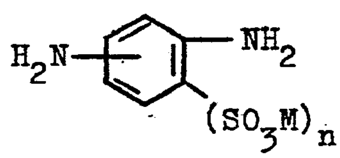

(17)

in welcher M und n die obengenannten Bedeutungen haben, und mit einer Diaminoverbindung der allgemeinen Formel $H_2N$-A-$NH_2$, in welcher A die obengenannte Bedeutung besitzt, herstellen.

Die Kondensationsreaktionen des Chlortriazins mit den Aminoverbindungen der allgemeinen Formeln (16), (17) und $H_2N$-A-$NH_2$ erfolgt in den üblichen Verfahrensweisen, wie sie für den Reaktionstyp der Umsetzung von Chlortriazin oder von Dichlortriazinylamino-Verbindungen mit Aminoverbindungen in der Literatur beschrieben sind, so beispielsweise im wäßrigen oder wäßrig-organischen Medium (wobei die organische Komponente bevorzugt Aceton, Toluol und Ethylenchlorid ist), bei einem pH-Wert zwischen 2 und 6 und bei einer Temperature zwischen 20 und 60°C. Die Ausgangsverbindungen, die zur Herstellung der erfindungsgemäßen Verbindungen dienen, sind zahlreich in der Literatur beschrieben oder können analog solchen in der Literatur beschriebenen Verbindungen mit den entsprechenden analogen Vorstufen hergestellt werden. So können beispielsweise die Ausgangs-Aminoverbindungen der allgemeinen Formeln (7) und (12) gemäß den in der deutschen Patentschrift Nr. 485 185 beschriebenen Verfahrensweisen leicht aufgebaut werden.

Die Abscheidung und Isolierung der erfindungsgemäß hergestellten Verbindungen der allgemeinen Formel (1) aus den Syntheselösungen erfolgt nach allgemein bekannten Methoden, so beispielsweise durch Ausfällen aus dem Reaktionsmedium mittels Elektrolyten oder durch Eindampfen der Reaktionslösung, wie beispielsweise durch Sprühtrocknung, wobei der Syntheselösung zuvor jeweils Puffersubstanzen zugefügt werden können.

Die erfindungsgemäßen Verbindungen haben Farbstoffeigenschaften. Infolge der faserreaktiven Gruppen, die sie besitzen, können sie auch als faserreaktive Farbstoffe Verwendung finden. Sie können nach an und für sich üblichen und bekannten Verfahrensweisen der Applikation und Fixierung von faserreaktiven Farbstoffen auf hydroxygruppenhaltigen und/oder carbonamidgruppenhaltigen Materialien, insbesondere Fasermaterialien, zum Färben (einschließlich Bedrucken) eingesetzt werden, so beispielsweise von Wolle, synthetischen Polyamidfasern, insbesondere jedoch von Cellulosefasermaterialien, wie Baumwolle. Solche Verfahrensweisen sind zahlreich in der Fachliteratur, wie auch Patentliteratur, so beispielsweise in der deutschen Offenlegungsschrift Nr. 3 440 265, beschrieben.

Die vorliegende Erfindung betrifft somit auch die Verwendung der erfindungsgemäßen Verbindungen zum Färben (einschließlich Bedrucken von hydroxygruppenhaltigem und/oder carbonamidgruppenhaltigen Materialien, insbesondere Fasermaterialien, bzw. ein Verfahren zum Färben (einschließlich Bedrucken) von solchen Materialien, bei welchem man eine erfindungsgemäße Verbindung aus bevorzugt wäßriger Lösung auf das Material aubringt und sie auf dem Material mittels Wärme und/oder mit Hilfe eines säurebindenden Mittels - beim Färben von hydroxygruppenhaltigen Materialien vorzugsweise bei einem pH-Wert zwischen 8 und 11 und bei einer Temperatur zwischen 15 und 120°C, vorzugsweise zwischen 20 und 80°C, - fixiert.

Die erfindungsgemäßen Verbindungen haben zudem den großen Vorteil, wie anfangs bereits erwähnt, daß sie hydroxygruppenhaltige Fasermaterialien, wie Cellulosefasermaterialien, aus wäßriger Flotte, wie bevorzugt im wäßrigen Färbebad nach einem Ausziehverfahren, bereits in einem schwach sauren pH-Bereich von 5 und größer als 5, wie bei einem pH-Wert zwischen 5 und 7, d.h. überraschenderweise in Abwesenheit von alkalisch wirkenden Substanzen, gegebenenfalls jedoch in Gegenwart eines üblichen säurebindenden Puffergemisches zur Einstellung und Einhaltung des pH-Bereiches und ggf. in Gegenwart üblicher Färbehilfsmittel, bei einer Temperatur zwischen 100 und 150°C, bevorzugt bei einer Temperatur von 120 bis 135°C, zu färben vermögen und auf diesen Materialien echt fixieren. Solche Puffer sind bspw. wäßrige Lösungen von Phosphorsäure/Natriumphosphat und Essigsäure/Natriumacetat.

Unter diesen Färbebedingungen die an und für sich bekannt sind (s. deutsche Auslegeschrift Nr. 2 835 035) und die im wesentlichen den Färbebedingungen des Färbens von Polyesterfasern oder anderen synthetischen Fasern, wie Cellulosetriacetatfasern, mit Dispersionsfarbstoffen entsprechen, ist es möglich, Cellulose-Mischfasermaterial, wie Cellulose-, Cellulosetriacetatfaser und Cellulose-Polyacrylnitrilfaser- und insbesondere Cellulose-Polyester-Mischfasermaterialien, mit einem üblichen Dispersionsfarbstoff gleichzeitig und zusammen mit einem faserreaktiven Farbstoff, nämlich einer erfindungsgemäßen Azoverbindung, aus einer gemeinsamen wäßrigen Färbeflotte ohne das ansonsten bestehende Risiko der Schädigung des Dispersionsfarbstoffes als auch der synthetischen Faser, wie Polyesterfaser, in einem einstufigen Verfahren mit Vorteil gleichmäßig und echt und gewünschtenfalls Ton-in-Ton zu färben.

Die vorliegende Erfindung betrifft somit auch ein Verfahren zum Färben von Mischfasermaterialien aus Cellulose und synthetischen Fasern, bevorzugt von Cellulose-Polyester-Fasergemischen mit einem (oder mehreren) Dispersionsfarbstoff(en) und einem oder mehreren erfindungsgemäßen Farbstoff(en) durch Einwirkung dieser Farbstoffe auf das Fasermaterial aus wäßriger Färbeflotte, bevorzugt aus wäßrigem Färbebad, bei einer Temperatur zwischen 100 und 150°C, bevorzugt bei einer Temperatur von 120 bis 135°C, und bei einem pH-Wert zwischen 4 und 8, erforderlichenfalls zwischen 5 bis 7,5, bevorzugt zwischen 5 und 7.

Mit dieser erfindungsgemäßen Färbeweise werden die synthetischen Fasern, wie Polyesterfasern, durch den Dispersionsfarbstoff und die Cellulosefasern durch die faserreaktive erfindungsgemäße Azoverbindung in der gewünschten guten Qualität gefärbt (hierbei erfolgt keine Anfärbung der synthetischen Faser, wie Cellulosetriacetat-und Polyesterfaser, durch die erfindungsgemäßen Azoverbindungen). Die Qualität der Färbung der synthetischen Fasern ist durch den Dispersionsfarbstoff bedingt und entspricht dem Stand der Technik. Überraschenderweise besitzen die Cellulosefasermaterialien, die unter diesen Bedingungen der Färbeweise für Dispersionsfarbstoffe mit den erfindungsgemäßen Azoverbindungen gefärbt wurden, neben einer klaren Nuance beachtliche Echtheitseigenschaften (diese Echtheitseigenschaften sind in jedem Falle vorhanden, wenn die erfindungsgemäßen Azoverbindungen auf den Cellulosefasermaterialien nach den üblichen Verfahrensweisen der Applikation und Fixierung für faserreaktive Farbstoffe im alkalischen Bereich angewendet werden). Von den guten Gebrauchs- und Fabrikationsechtheiten sind insbesondere die guten Lichtechtheiten sowohl der trockenen als auch der feuchten, mit Trinkwasser oder einer alkalischen Schweißlösung imprägnierten Cellulosefärbung, weiterhin von den Naßechtheiten insbesondere die guten Wasch-, Wasser-, Seewasser-, Überfärbe- und Schweißechtheiten sowie die gute Säurelagerbeständigkeit und ebenfalls die guten Plissier-, Bügelecht-, Reib- und Sublimierechtheiten Färbungen auf Cellulosefasematerialien hervorzuheben, die mit den erfindungsgemäßen Azoverbindungen nicht nur bei Anwendung der Varfahrensweisen für faserrektive Farbstoffe im alkalischen Bereich, sonderen auch bei Anwendung der Färbeweisen für Dispersionsfarbstoffe erhältlich sind.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die in den Beispielen für die erfindungsgemäßen Azoverbindungen im sichtbaren Bereich genannten Absorptionsmaxima ($\lambda_{max}$-Werte) wurden anhand deren Alkalisalze aus wäßriger Lösung ermittelt.

Beispiel 1

74 Teile Cyanurchlorid werden in wäßriger Suspension unter Rühren mit einer neutralen Lösung von 75,3 Teilen 1,3-Diaminobenzol-4-sulfonsäure bei 0 bis 5°C versetzt; man läßt den pH-Wert auf kleiner als 1 abfallen und rührt den Ansatz noch 90 Minuten bei dem pH-Wert unterhalb 1 und bei einer Temperatur von 0 bis 5°C nach. Man gibt sodann langsam 21,6 Teile 1,4-Diaminobenzol in das Reaktionsgemisch, rührt 30 Minuten nach und stellt sodann innerhalb von 90 Minuten den pH-Wert auf 5,5, erwärmt langsam auf 40 bis 50°C und rührt den Reaktionsansatz bei dieser Temperatur noch drei Stunden unter Einhaltung eines pH-Wertes von 5 bis 5,5 nach. Gegen Ende der zweiten Kondensationsreaktion wird der pH-Wert auf 7 gestellt, wobei Lösung des Reaktionsproduktes eintritt.

Der Ansatz wird auf etwa 10°C abgekühlt, mit 52,5 Volumenteilen einer 39%igen wäßrigen Natriumnitritlösung vermischt und in üblicher Weise durch langsames Eingießen in ein Gemisch aus 150 Volumenteilen konzentrierter Salzsäure und 1000 Teilen Eis diazotiert. Man rührt noch etwa 30 Minuten nach und gibt 10 % Natriumchlorid, bezogen auf das Volumen der Diazoniumsalzsuspension, hinzu, rührt bei gelindem Nitritüberschuß noch drei Stunden nach und zerstört sodann überschüssiges Nitrit mittels Amidosulfonsäure. Die Kupplungsreaktion erfolgt durch Zugabe einer neutralen wäßrigen Lösung von 127, 6 Teilen 3-Methyl-1-(4'-β-sulfatoethylsulfonyl)-phenyl-5-pyrazolon bei einem pH-Wert von 5 bis 6. Die daraus resultierende Suspension wird mit etwa 600 Teilen Wasser versetzt und mittels Essigsäure auf eine pH-Wert von 4 bis 4,5 gestellt, mit 74 Teilen Nicotinsäure versetzt und unter Einhaltung des pH-Wertes von 4 bis 4,5 während 2 Stunden am Rückfluß gekocht. Der Ansatz wird anschließend geklärt (bspw. mittels Kieselgur und Filtration) und eingedampft.

Man erhält ein elektrolythaltiges gelbes Pulver mit dem Alkalisalz der Verbindung der Formel

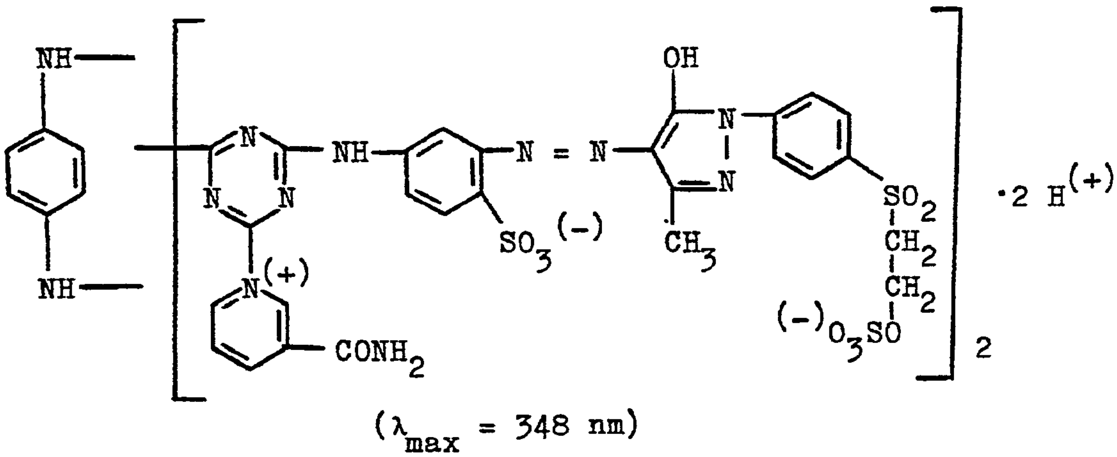

($\lambda_{max}$ = 348 nm)

die sehr gute faserreaktive Farbstoffeigenschaften besitzt und beispielsweise Wolle oder Cellulosefasermaterialien nach den in der Technik für faserreaktive Farbstoffe üblichen Applikations- und Fixierverfahren in farbstarken gelben Nuancen zu färben vermag. Beispielsweise erhält man auf Baumwolle kräftige neutral gelbe Färbungen und Drucke mit guten Echtheiten (s. Anwendungsbeispiel 2).

Mit Vorteil läßt sich die erfindungsgemäße Verbindung auch zum Färben von Cellulosefasermaterialien unter den Bedingungen des Färbens von Polyesterfasern mit Dispersionsfarbstoffen, d.h. aus wäßriger Lösung bei einem pH-Wert zwischen 5 und 8 und bei einer Temperatur zwischen 110 und 130°C, anwenden (s. Andwendungsbeispiel 1).

Beispiel 2

Eine Lösung mit einem pH-Wert von 6 bis 7 des Natriumsalzes von 37 Teilen 4,4'-Diamino-stilben-2,2'-disulfonsäure in etwa 230 Teilen Wasser gibt man unter gutem Rühren in ein Gemisch aus 400 Teilen Eis, 37 Teilen Cyanurchlorid und 1 Teil eines handelsüblichen Dispergiermittels. Man stellt den pH-Wert mit einer wäßrigen Natriumcarbonatlösung auf eine pH von 4 bis 5 und rührt den Ansatz noch 1 Stunde bei einer Tempratur von 0 bis 5°C nach.

Sodann gibt man eine neutrale Lösung des Natriumsalzes von 37,7 Teilen 1,3-Diaminobenzol-4-sulfonsäure in 300 Teilen Wasser hinzu und rührt das Reaktionsgemisch bei einer Temperatur von 40 bis 50°C und unter Einhaltung eines pH-Wertes von 4 bis 5 noch drei Stunden und versetzt es anschließend mit 36 Teilen Nicotinsäureamid und 10 Teilen Natriumdihydrogenphosphat, stellt den Ansatz mittels Natirumbicarbonat auf einen pH-Wert von 4 bis 5 und erhitzt ihn drei Stunden bei 90 bis 110°C.

Die so hergestellte Ausgangs-Disazoverbindung der Formel (in Form der freien Säure geschrieben)

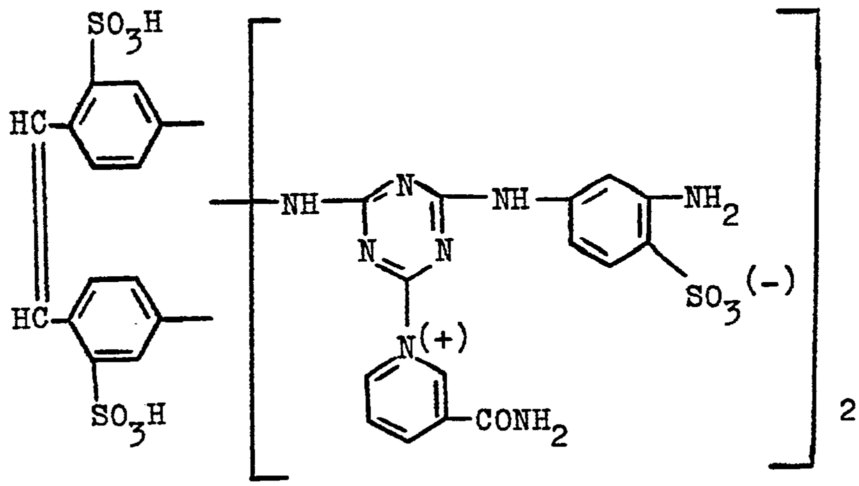

wird nun in deren Syntheselösung in üblicher Weise diazotiert (tetrazotiert), so nach Zugabe von Eis und konzentrierter wäßriger Salzsäure zur Einstellung eines pH-Wertes von 1 mittels einer etwa 40%igen wäßrigen Natriumnitritlösung bei einer Temperatur zwischen 0 und 10°C; die Suspension der Bis-Diazoniumverbindung wird anschließend auf eine pH-Wert von 5 bis 7 gestellt und mit einer wäßrigen Lösung von 106 Teilen 1-[3'-(β-Chlorethylsulfonyl)-benzoylamino]-8-naphthol-3,6-disulfonsäure versetzt und die Kupplungsreaktion in diesem pH-Bereich bei einer Temperatur von 10 bis 20°C zu Ende geführt.

Die erfindungsgemäße Disazoverbindung wird, bezogen auf das Volumen des Syntheseansatze s, mit 20 % Kaliumchlorid ausgesalzen, abfiltriert und unter reduziertem Druck bei 80°C getrocknet. Man erhält ein dunkelrotes, elektrolythaltiges Pulver mit dem Alkalisalz (insbesondere Kaliumslaz) der Verbindung der Formel

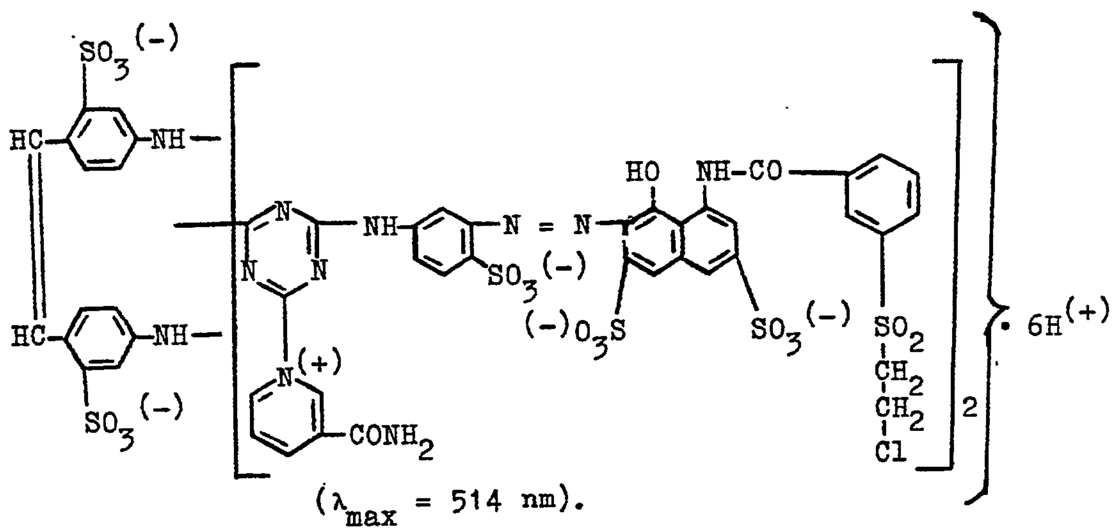

($\lambda_{max}$ = 514 nm).

Diese Verbindung besitzt sehr gute faserreaktive Farbstoffeigenschaften und färbt beispielsweise Wolle oder Cellulosefasermaterialien nach den in der Technik für faserreaktive Farbstoffe üblichen Applikations- und Fixierverfahren. Beispielsweise erhält man auf Baumwolle analog dem Anwendungsbeispiel 2 kräftige blaustichig rote Färbungen und Drucke mit guten Echtheiten, von denen insbesondere die guten Lichtechtheiten auf trockenem und auf mit Trinkwasser oder einer sauren oder alkalischen wäßrigen Schweißlösung imprägniertem Material und die gute Chlorwasserechtheit, die guten sauren und alkalischen Schweißechtheiten, die guten Waschechtheiten, Wasser- und Reibechtheiten hervorgehoben werden können.

Mit Vorteil läßt sich die erfindungsgemäße Verbindung auch zum Färben von Cellulosefasermaterialien unter den Bedingungen des Färbens von Polyesterfasern mit Dispersionsfarbstoffen, d.h. aus wäßriger Lösung bei einem pH-Wert zwischen 5 und 8 und bei einer Temperatur zwischen 120 und 150°C, anwenden (analog Anwendungsbeispiel 1), wobei man ebenfalls farbstarke blaustichig rote Färbungen mit dem obengenannten vorteilhaften Echtheitseigenschaften erhält. Auch bei dieser Färbeweise zeigt die erfindungsgemäße Disazoverbindung einen sehr guten Farbaufbau.

Beispiel 3

21,6 Teile 1,4-Diaminobenzol werden in ein Gemisch aus 500 Teilen Wasser, 400 Teilen Eis, 74 Teilen Cyanurchlorid und 10 Teilen eines handelsüblichen Dispergiermittels eingerührt. Man rührt 2 Stunden nach und setzt sodann unter Rühren eine neutrale Lösung von 75,3 Teilen 1,3-Diaminobenzol-4-sulfonsäure in 400 Teilen Wasser hinzu, läßt die Temperatur auf 25°C ansteigen und erwärmt weiter innerhalb von 1 Stunde auf 40°C, wobei man den pH auf einen Wert von 5 einstellt und hält. Man rührt eine Stunde bei 40°C nach, erhöht sodann wiederum die Reaktionstemperatur während einer weiteren Stunde auf 50 bis 60°C unter Einhaltung eines pH-Wertes zwischen 4 und 5, rührt weiter, bis zur Einhaltung dieses pH-Bereiches kein weiteres säurebindendes Mittel (wie Natriumbicarbonat) mehr verbraucht wird, kühlt das Reaktionsgemisch ab und diazotiert es in üblicher Weise mittels 40 Volumenteilen einer 39%igen wäßrigen Natriumnitritlösung und 90 Volumenteilen einer wäßrigen konzentrierten Salzsäure. Der Ansatz wird noch drei Stunden bei etwa 0 bis 5°C nachgerührt und überschüssiges Nitrit entfernt. Als Kupplungskomponente verwendet man 2-(4'-β-Sulfatoethylsulfonyl-phenyl-azo)-3,6-disulfo-1-amino-8-naphthol. Man gibt 183 Teile dieser Monoazoverbindung zur Suspension des Diazoniumsalzes hinzu und führt die Kupplungsreaktion bei einem pH-Wert zwischen 6 und 7 und einer Temperatur zwischen 10 und 20°C durch.

Die so hergestellte Bis-[(Chlortriazinylamino)-disazo]-Verbindung wird nunmehr in deren Syntheselösung bei einem pH-Wert von 4 bis 4,5 während zwei Stunden bei Rückflußtemperatur mit 36,6 Teilen Nicotinsäure umgesetzt. Der Ansatz wird anschließend geklärt und die entstandene erfindungsgemäße Disazoverbindung in üblicher Weise durch Aussalzen oder Eindampfen isoliert.

Man erhält ein elektrolythaltiges schwarzes Pulver mit dem Alkalimetallsalz der Verbindung der Formel

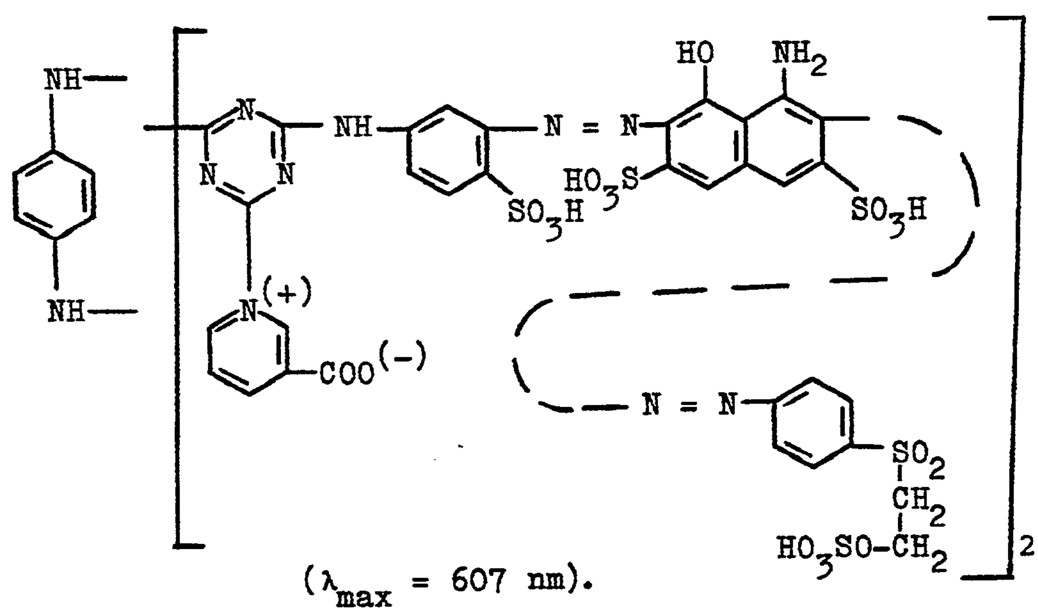

($\lambda_{max}$ = 607 nm).

Diese erfindungsgemäße Verbindung besitzt sehr gute faserreaktive Farbstoffeigenschaften und liefert nach den Verfahren der alkalischen Fixierung von faserreaktiven Farbstoffen, so beispielsweise aus langer wäßriger Flotte bei 60 bis 80°C in Gegenwart eines Alkalis auf Cellulosefasermaterialien farbstarke marineblaue Färbungen mit den nachfolgend genannten guten Echtheiten. Mit gleichem Vorteil färbt die erfindungsgemäße Verbindung ohne Alkalizusatz aus wäßrigem Färbebad bei einer Temperatur zwischen 120 und 130°C und einem pH-Wert zwischen 5 und 7 Cellulosefasermaterialien in farbstarken marineblauen Tönen mit guten Echtheiten, von denen insbesondere die guten Lichtechtheiten auf trockenem und feuchtem Material und die guten Naßechtheiten, wie insbesondere guten Schweißechtheiten, hervorgehoben werden können. Die erfindungsgemäße Verbindung zeigt außerdem einen guten Farbaufbau.

Beispiel 4

19 Teile Cyanurchlorid und 18,8 Teile 1,3-Diaminobenzol-4-sulfonsäure werden in 200 Teilen Wasser bei 10°C und einem pH-Wert von 2 bis 3 miteinander verrührt. Nach Beendigung der Kondensationsreaktion wird eine wäßrige Lösung von 5,5 Teilen 1,4-Diaminobenzol zugegeben, und es wird so lange bei einer Reaktionstemperatur von 40 bis 60°C und einem pH-Wert von 4 bis 6 gerührt, bis keine Ausgangsstoffe mehr nachweisbar sind (dies kann in üblicher Weise chromatographisch erfolgen). Anschließend gibt man 18 Teile Nicotinsäure hinzu und führt die dritte Kondensationsreaktion während mehrere Stunden bei 90°C und unter Einhaltung eines pH-Wertes zwischen 4 und 5 durch.

Nach Beendigung der Reaktion wird der Ansatz abegkühlt, mit Salzsäure angesäuert und das Produkt gemäß den üblichen Verfahrensweisen diazotiert (tetrazotiert). Die erhaltene Suspension des Bis-Diazoniumsalze wird anschließend mit 39 Teilen Acetoacetyl-[2,5-dimethoxy-4-(β-sulfatoethylsulfonyl]-anilid versetzt; die Kupplungsreaktion erfolgt bei einer Temperatur zwischen 10 und 20°C und einem pH-Wert zwischen 5 und 6.

Die erfindungsgemäße Disazoverbindung der Formel (in Form der freien Säure geschrieben)

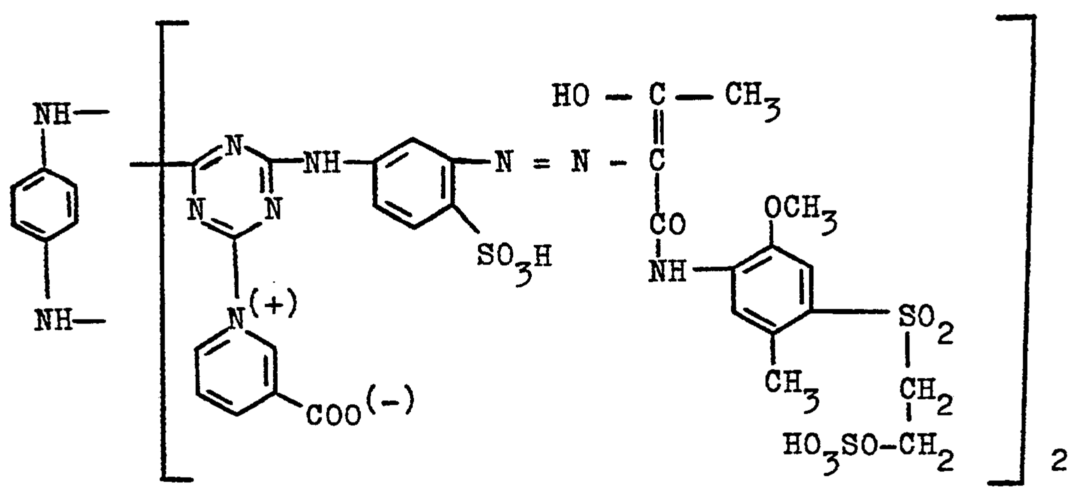

wird in üblicher Weise als Alkalimetallsalz isoliert. Sie zeigt sehr gute faserreaktive Farbstoffeigenschaften und liefert insbesondere auf Cellulosefasermaterialien, beispielsweise nach den üblichen Applikations- und Fixiermethoden in Gegenwart eines Alkalis, so beispielsweise aus einem alkalischen wäßrigen Färbebad bei 60 bis 80°C, ebenso aber auch in Abwesenheit eines Alkalis aus wäßriger Färbeflotte bei einem pH-Wert zwischen 5 und 7 und einer Temperatur zwischen 110 und 140°C, farbstarke grünstichig gelbe Färbungen mit guten Fabrikations- und Gebrauchsechtheitseigenschaften, von denen insbesondere die guten Licht-, Wasch-, Schweiß- und Wasserechtheiten hervorgehoben werden können.

Beispiel 5

In ein Gemisch aus 400 Teilen Eis, 100 Teilen Wasser und 74 Teilen Cyanurchlorid rührt man innerhalb von 10 Minuten die neutrale Lösung von 68,8 Teilen 4,4'-Diaminodiphenyl-2,2'-disulfonsäure in 400 Teilen Wasser ein. Der Ansatz wird bei 0 bis 10°C und bei einem pH-Wert zwischen 2 und 3 noch etwa eine halbe Stunde nachgerührt. Sodann gibt man 75,3 Teile 1,4-Diamino-benzol-2-sulfonsäure hinzu, erhöht den pH-Wert auf 4,5 bis 5,5, erwärmt den Ansatz auf 45 bis 55°C und hält ihn bei dieser Temperatur und innerhalb dieses pH-Bereiches, bis zugesetztes Natriumbicarbonat nicht mehr verbraucht wird.

Anschließend gibt man dem Ansatz 73,8 Teile Nicotinsäure hinzu, stellt mit sekundärem Natriumphosphat einen pH-Wert von 4 bis 4,5 ein, erhitzt den Ansatz zum Sieden und rührt ihn unter Kochtemperatur noch zwei Stunden weiter. Das Reaktionsgemisch wird sodann abgekühlt und die erhaltene Bis-(aminophenylamino-triazinyl)-Verbindung in deren Syntheselösung in üblicher Weise bei einem mineralsauren pH-Wert mittels 52,5 Teilen einer 39%igen wäßrigen Natriumnitritlösung diazotiert.

In einem getrennten Ansatz stellt man die Kupplungskomponente her, indem man 95,6 Teile 3-Sulfo-6-amino-1-naphthol und 112,4 Teile 3-(β-Sulfatoethylsulfonyl)-anilin nacheinander in an und für sich bekannter Verfahrensweise mit 80 Teilen Cyanurchlorid zum Monochlor-triazinyl-Kondensationsprodukt umsetzt.

Die wäßrige Syntheselösung dieses Kondensationsproduktes wird erforderlichenfalls auf einen pH-Wert zwischen 6,5 und 7 gestellt und zur mineralsauren Diazoniumsalzlösung gegegen. Die Kupplung wird bei einem pH-We rt zwischen 5 und 6 während drei bis vier Stunden durchefürt. Die erfindungsgemäße Disazoverbindung wird aus ihrer Syntheselösung bei 60°C mit Kaliumchlorid ausgesalzen und durch Filtration isoliert; sie besitzt (in Form der freien Säure geschrieben) die Formel

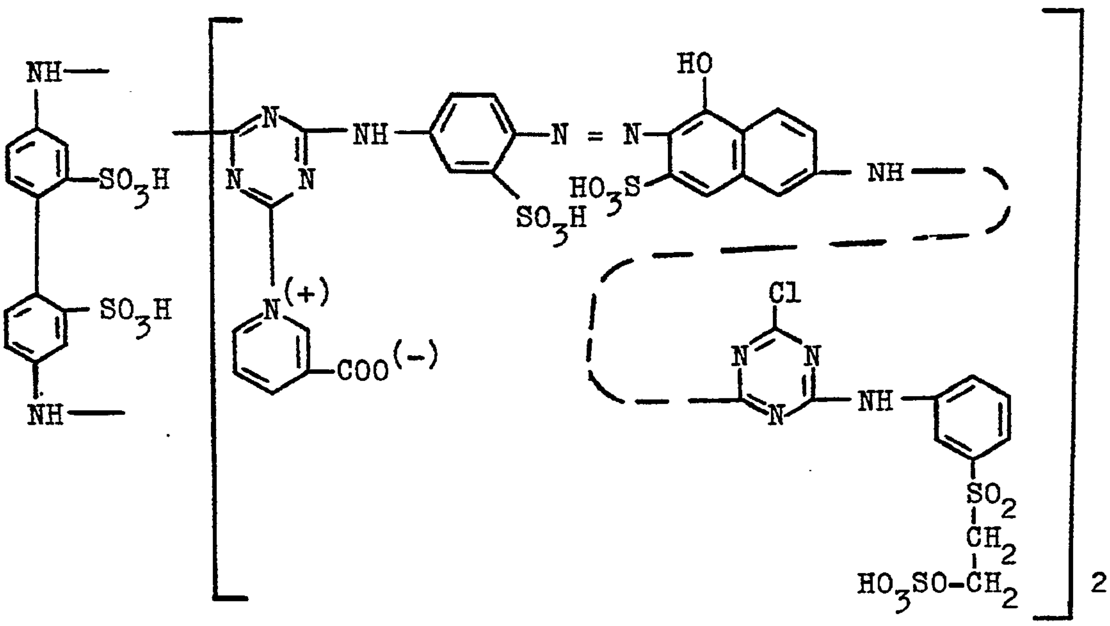

($\lambda_{max}$ = 513 nm)

und weist sehr gute färberische Eigenschaften auf. So färbt sie Cellulosefasermaterialien beispielsweise bei einem pH-Wert zwischen 5 und 8 aus wäßrigem Bad bei einer Temperatur zwischen 120 und 130 °C in einer Färbezeit von 60 bis 90 Minuten in farbstarken echten scharlachroten Tönen. Ebenso erhält man nach den üblichen Methoden des Färbens und Fixierens für Reaktivfarbstoffe, so beispielsweise im Ausziehverfahren bei Färbetemperaturen zwischen 40 und 80°C unter Zusatz eines alkalisch wirkenden Mittels, wie Natriumcarbonat und Natronlauge, farbtiefe scharlachrote echte Färbungen.

Beispiele 6 bis 70

Mit den nachfolgenden Tabellenbeispielen werden weitere erfindungsgemäße Disazoverbindungen entsprechend der oben genannten allgemeinen Formel (1) mit Hilfe derer Komponenten beschrieben (Die unter der Rubrik "Nuance" in Klammern befindlichen Zahlenwerte stellen die $\lambda_{max}$-Werte in nm dar). Sie lassen sich in erfindungsgemäßer Weise, so beispielsweise nach einem der obigen Ausführungsbeispiele, herstellen und liefern insbesondere auf Cellulosefasermaterialien, wie Baumwolle, nach den für faserreaktive Farbstoffe üblichen Applikations- und Fixierverfahren farbstarke echte Färbungen und Drucke mit den für das jeweilige Tabellenbeispiel angegebenen Farbton. Färbungen auf Cellulosefasermaterialien mit gleich guten Farstärken und gleich guten Echtheiten werden ebenso aus wäßrigem Bad bei einer Temperatur zwischen 110 und 140°C und einem pH-Wert zwishcen 5 und 7,5, gegebenenfalls unter Zusatz eines Elektrolytsalzes, wie Natriumsulfat oder Natriumchlorid, und eines Puffergemisches zur Einhaltung dieses pH-Bereiches, erhalten. Die in den Tabellenbeispielen angegebene Komponente (C) entspricht dem Rest der allgemeinen Formel (C) entrsprechend der Ausgangs-Diaminoverbindung der allgemeinen Formel (20):

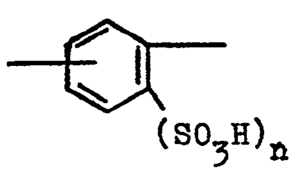

(C)

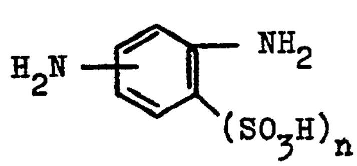

(20)

| Bsp. | Azoverbindungen der allgemeinen Formel (1) mit ... Komponente A | R | Komponente (C) | Kupplungskomp. H-K | Nuance auf Baumwolle |
|---|---|---|---|---|---|
| 6 | 3,3'-Disulfo-diphen-4,4'-ylen | Carboxy | 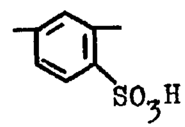 | 1-(4'-ß-Sulfatoethyl-sulfonyl-phenyl)-3-methyl-5-pyrazolon | gelb |
| 7 | 1,4-Phenylen | Carbamoyl | dito | dito | gelb (396) |
| 8 | dito | Carbamoyl | 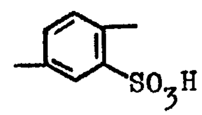 | dito | rotstichig gelb (416) |
| 9 | dito | Carbamoyl | dito | 1-(4'-ß-Sulfatoethyl-sulfonyl-phenyl)-3-carboxy-5-pyrazolon | rotstichig gelb |
| 10 | dito | Carbamoyl | 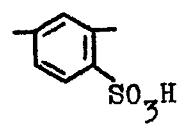 | dito | gelb (397) |
| 11 | 2,2'-Disulfo-stilben-4,4'-ylen | Carboxy | dito | 1-(3'-ß-Sulfatoethyl-sulfonyl-phenyl)-3-carboxy-5-pyrazolon | gelb (398) |
| 12 | dito | Carboxy | dito | 1-(3'-Vinylsulfonyl-phenyl)-3-carboxy-5-pyrazolon | gelb (390) |
| 13 | dito | Carboxy | dito | 1-(3'-Vinylsulfonyl-phenyl)-3-methyl-5-pyrazolon | gelb |

Azoverbindungen der allgemeinen Formel (1) mit ...

| Bsp. | Komponente A | R | Komponente (C) | Kupplungskomp. H-K | Nuance auf Baumwolle |
|---|---|---|---|---|---|
| 14 | dito | Carboxy | dito | 1-(3'-ß-Sulfatoethyl-sulfonyl-phenyl)-3-methyl-5-pyrazolon | gelb |
| 15 | dito | Carboxy | dito | 1-(4'-ß-Sulfatoethyl-sulfonyl-phenyl)-3-methyl-5-pyrazolon | gelb |
| 16 | dito | Carbamoyl | dito | dito | gelb |
| 17 | 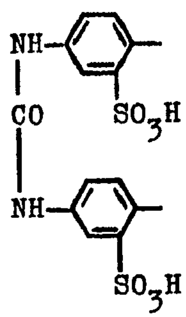 | Carbamoyl | dito | dito | gelb |
| 18 | dito | Carbamoyl | dito | 1-(3'-ß-Sulfatoethyl-sulfonyl-phenyl)-3-methyl-5-pyrazolon | gelb |
| 19 | 3,3'-Disulfo-diphenyl-4,4'-ylen | Carbamoyl | dito | 1-(4'-ß-Sulfatoethyl-sulfonyl-phenyl)-3-methyl-5-pyrazolon | gelb |
| 20 | dito | Carboxy | 1,4-Phenylen | N-(4-ß-Sulfatoethyl-sulfonyl)-acetoacetyl-anilid | grünstichig gelb |

| Bsp. | Komponente A | R | Komponente (C) | Kupplungskomp. H-K | Nuance auf Baumwolle |
|---|---|---|---|---|---|
| | *Azoverbindungen der allgemeinen Formel (1) mit ...* | | | | |
| 21 | 1,4-Phenylen | Carboxy | 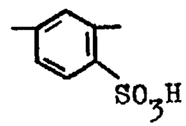 | 3-{N-[3'-(ß-Chlorethyl-sulfonyl)-benzoyl]-N-methyl}-amino-6-sulfo-8-naphthol | orange |
| 22 | dito | Carbamoyl | dito | dito | orange |
| 23 | dito | Carbamoyl | 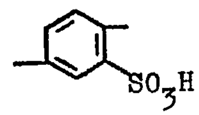 | dito | rot (508) |
| 24 | 2-Sulfo-1,4-phenylen | Carbamoyl | dito | 3-{N-[3'-(ß-Sulfatoethyl-sulfonyl)-benzoyl]}-amino-6-sulfo-8-naphthol | rot |
| 25 | dito | Carbamoyl | 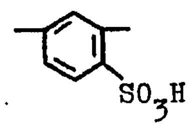 | dito | orange |
| 26 | dito | Carbamoyl | dito | 3-{N-[4'-(ß-Chlorethyl-sulfonyl)-methyl-benzoyl]}-amino-6-sulfo-8-naphthol | orange |
| 27 | dito | Carboxy | dito | dito | orange |
| 28 | dito | Carboxy | dito | 2-{N-[4'-(ß-Chlorethyl-sulfonyl)-methyl-benzoyl]}-amino-6-sulfo-8-naphthol | blaustichig rot |

Azoverbindungen der allgemeinen Formel (1) mit ...

| Bsp. | Komponente A | R | Komponente (C) | Kupplungskomp. H-K | Nuance auf Baumwolle |
|---|---|---|---|---|---|
| 29 | 2,2'-Disulfo-stilben-4,4'-ylen | Carboxy | dito | dito | blaustichig rot |
| 30 | dito | Carbamoyl | dito | 3-[4'-(4"-ß-Sulfato-ethylsulfonyl)-phenyl-amino-2'-chlor-s-triazin-6'-yl]-amino-6-sulfo-8-naphthol | orange |
| 31 | dito | Carboxy | dito | dito | orange |
| 32 | dito | Carbamoyl | dito | dito | orange |
| 33 | 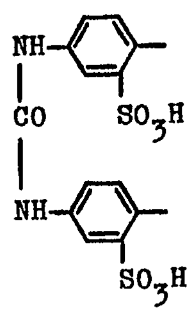 | Carbamoyl | dito | dito | orange |
| 34 | 2,2'-Disulfo-stilben-4,4'-ylen | Carboxy | dito | 3-{N-[4'-(4"-ß-Sulfato-ethylsulfonyl)-phenyl-amino-2'-chlor-s-triazin-6'-yl]-N-methyl-amino}-6-sulfo-8-naphthol | orange |

| Bsp. | Azoverbindungen der allgemeinen Formel (1) mit ... Komponente A | R | Komponente (C) | Kupplungskomp. H-K | Nuance auf Baumwolle |
|---|---|---|---|---|---|
| 35 | 1,4-Phenylen | Carbamoyl | dito | 1-{N-[3'-(ß-Chlorethyl-sulfonyl)-benzoyl]}-amino-3,6-disulfo-8-naphthol | violett |
| 36 | dito | Carboxy | dito | dito | violett |
| 37 | 1,4-Phenylen | Carbamoyl | dito | 1-{N-[3'-(ß-Chlorethyl-sulfonyl)-benzoyl]}-amino-4,6-disulfo-8-naphthol | blaustichig rot |
| 38 | dito | Carbamoyl | dito | 1-{N-[4'-(ß-Chlorethyl-sulfonyl)-methyl-benzoyl]}-amino-3,6-disulfo-8-naphthol | violett |
| 39 | dito | Carbamoyl | dito | 1-{N-[4'-(4"-ß-Sulfato-ethylsulfonyl)-phenyl-amino-2'-chlor-s-triazin-6'-yl]}-amino-3,6-disulfo-8-naphthol | violett |
| 40 | dito | Carboxy | dito | dito | violett |
| 41 | 2,2'-Disulfo-stilben-4,4'-ylen | Carboxy | dito | dito | violett |
| 42 | dito | Carbamoyl | dito | dito | violett |

Azoverbindungen der allgemeinen Formel (1) mit ...

| Bsp. | Komponente A | R | Komponente (C) | Kupplungskomp. H-K | Nuance auf Baumwolle |
|---|---|---|---|---|---|
| 43 | dito | Carbamoyl | dito | 1-{N-[4'-(4"-ß-Sulfato-ethylsulfonyl)-phenyl-amino-2'-chlor-s-triazin-6'-yl]}-amino-4,6-disulfo-8-naphthol | blaustichig rot |
| 44 | dito | Carbamoyl | dito | 1-{N-[3'-(4"-ß-Sulfato-ethylsulfonyl)-phenyl-amino-2'-chlor-s-triazin-6'-yl]}-amino-3,6-disulfo-8-naphthol | violett |
| 45 | 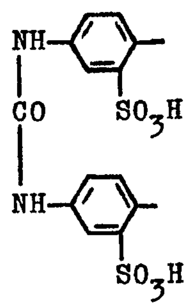 | Carbamoyl | dito | dito | violett |
| 46 | dito | Carboxy | dito | dito | violett |
| 47 | 3,3'-Disulfo-diphen-4,4'-ylen | Carboxy | dito | dito | violett |
| 48 | 1,4-Phenylen | Carbamoyl | dito | 2-[4'-(ß-Sulfatoethyl-sulfonyl)-phenyl]-azo-3,6-disulfo-1-amino-8-naphthol | marineblau |

| | Azoverbindungen der allgemeinen Formel (1) mit ... | | | | Nuance auf |
|---|---|---|---|---|---|
| Bsp. | Komponente A | R | Komponente (C) | Kupplungskomp. H-K | Baumwolle |
| 49 | dito | Carboxy | dito | dito | marineblau |
| 50 | dito | Carboxy | 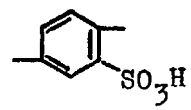 | dito | grünstichig blau |
| 51 | dito | Carboxy | 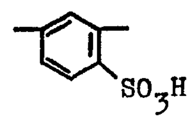 | 2-[4'-(ß-Sulfatoethyl-sulfonyl)-2'-brom-phenyl]-azo-3,6-disulfo-1-amino-8-naphthol | marineblau |
| 52 | dito | Carboxy | dito | 2-[6'-(ß-Sulfatoethyl-sulfonyl)-1'-sulfo-naphth-2'-yl]-azo-3,6-disulfo-1-amino-8-naphthol | marineblau |
| 53 | 2,2'-Disulfo-stilben-4,4'-ylen | Carbamoyl | dito | 2-[4'-(ß-Sulfatoethyl-sulfonyl)-phenyl]-azo-3,6-disulfo-1-amino-8-naphthol | marineblau (608) |
| 54 | dito | Carboxy | dito | dito | marineblau (610) |
| 55 | dito | Carboxy | dito | 2-[4'-Vinylsulfonyl-phenyl]-azo-3,6-disulfo-1-amino-8-naphthol | marineblau |
| 56 | 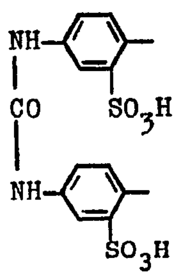 | Carboxy | dito | dito | marineblau |

| Bsp. | Komponente A | R | Komponente (C) | Kupplungskomp. H-K | Nuance auf Baumwolle |
|---|---|---|---|---|---|
| | Azoverbindungen der allgemeinen Formel (1) mit ... | | | | |
| 57 | dito | Carbamoyl | dito | dito | marineblau |
| 58 | 2,2'-Disulfo-diphen-4,4'-ylen | Carbamoyl | dito | dito | marineblau |
| 59 | dito | Carbamoyl | dito | 2-[4'-(ß-Sulfatoethyl-sulfonyl)-phenyl]-azo-3,6-disulfo-1-amino-8-naphthol | marineblau |
| 60 | 3,3'-Disulfo-diphen-4,4'-ylen | Carbamoyl | dito | dito | marineblau |
| 61 | dito | Carboxy | 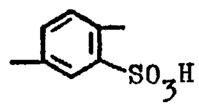 | 2-[4'-(ß-Sulfatoethyl-sulfonyl)phenyl]-azo-4,6-disulfo-1-amino-8-naphthol | marineblau |
| 62 | 1,4-Phenylen | Carbamoyl | 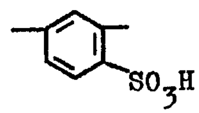 | N-(4-ß-Sulfatoethyl-sulfonyl)-acetoacetyl-anilid | grünstichig gelb |
| 63 | dito | Carboxy | dito | dito | grünstichig gelb |
| 64 | dito | Carboxy | dito | N-[2-Methyl-5-methoxy-4-(ß-sulfatoethyl-sulfonyl)]-acetoacetyl-anilid | grünstichig gelb |
| 65 | 2,2'-Disulfo-stilben-4,4'-ylen | Carboxy | dito | N-(4-ß-Sulfatoethyl-sulfonyl)-acetoacetyl-anilid | grünstichig gelb |
| 66 | dito | Carboxy | 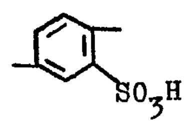 | dito | grünstichig gelb |

| | Azoverbindungen der allgemeinen Formel (1) mit ... | | | | Nuance auf |
|---|---|---|---|---|---|
| Bsp. | Komponente A | R | Komponente (C) | Kupplungskomp. H-K | Baumwolle |
| 67 | dito | Carbamoyl | dito | dito | grünstichig gelb |
| 68 | 2,2'-Disulfo-diphen-4,4'-ylen | Carbamoyl | 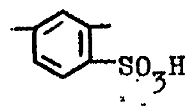 | dito | grünstichig gelb |
| 69 | dito | Carboxy | dito | dito | grünstichig gelb |
| 70 | 3,3'-Disulfo-diphen-4,4'-ylen | Carboxy | dito | dito | grünstichig gelb |

Anwendungsbeispiel 1

50 Teile eines Baumwollgewebes gibt man in ein Färbebad aus 1 Teil der erfindungsgemäßen Disazoverbindung von Beispiel 1 (in Form des neutralen Salzes), 50 Teilen wasserfreiem Natirumsulfat, 800 Teilen Wasser und 200 Teilen einer wäßrigen Pufferlösung, die aus 200 Teilen Wasser und 20 Teilen 85%iger Phosphorsäure zubereitet und mit Natronlauge auf einen pH-Wert von 6 gestellt wird. Das Gewebe wird in dem Bad bei einer Temperatur von 130°C wähmed 90 Minuten unter ständiger Bewegung behandelt. Anschließend wird die erhaltene Färbung durch Spülen mit warmem und mit heißem Wasser, durch Waschen in einem wäßrigen Bad aus 1500 Teilen Wasser und 1,5 Teilen eines nichtionogenen Mittels bei Kochtemperatur während 15 Minuten und durch erneutes Spülen mit warmem Wasser nachbehandelt und getrocknet.

Es wird eine kräftige gelbe Färbung erhalten, die eine gute Lichtechtheit auf trockenem und feuchtem Gewebe, einschließlich einer guten sauren und alkalischen Schweiß-Lichtechtheit, und gute Naßechtheiten, wie eine gute Wasser-, 60°C- und 95°C-Wäsche-, Schweiß- und Chlorwasser-Echtheit, desweiteren eine gute Reibechtheit besitzt. Darüberhinaus zeigt die erfindungsgemäße Verbindung einen guten Farbaufbau in diesem Färbeverfahren.

Führt man das Färbeverfahren nicht bei einem pH-Wert von 6, sondern bei einem pH-Wert von 5, von 7 oder 8 durch, so erhält man gleichgute gelbe Färbungen mit praktisch gleicher Farbstärke wie bei der bei pH 6 hergestellten Färbung.

Anwendungsbeispiel 2

Setzt man die erfindungsgemäße Disazoverbindung des Beispieles 1 zum Färben von Cellulosefasermaterial, wie Baumwollgewebe, nach einem für faserreaktive Farbstoffe üblichen Färbeverfahren ein, wie beispielsweise im Ausziehverfahren bei einer Temperatur von 60°C oder 80°C in Gegenwart eines alkalisch wirkenden Mittels, wie Natriumcarbonat und Natronlauge, und eines Elektrolytsalzes, wie Natriumsulfat, so erhält man ebenfalls sehr farbstarke gelbe Färbungen mit guten Echtheiten, von denen insbesondere die gute Lichtechtheit auf trockenem und feuchtem Gewebe, einschließlich einer guten Schweißlichtechtheit, weiterhin die gute Reibechtheit und die guten Wasser-, Wasch-, Schweiß- und Chlorwasser-Echtheiten hervorgehoben werden können.

Anwendungsbeispiel 3

Man bereitet in Färbebad aus 80 Teilen Wasser, 1 Teil der erfindungsgemäßen Disazoverbindung des Beispieles 3, 50 Teilen wasserfreiem Natriumsulfat und 1 Teil Natrium-m-nitrobenzolsulfonat, stellt es auf einen pH-Wert von 6 ein und gibt 3 Teile des Dispersionsfarbstoffes Colour-Index Disperse Blue 79 hinzu.

Zu dieser Färbeflotte gibt man 50 Teile eines Polyester/Baumwolle-Mischgewebes (50:50), heizt das Färbebad innerhalb 30 Minuten auf eine Temperatur von 130°C und führt die Färbung bei 130°C noch 60 Minuten fort. Danach wird das gefärbte Gewebe aus der Färbeflotte herausgenommen, nachbehandelt und fertiggestellt (bspw. wie im Anwendungsbeispiel 1 beschrieben). Man erhält ein gleichmäßig und intensiv marineblau gefärbtes Gewebe, bei dem beide Faseranteile durchgefärbt sind. Die Färbung besitzt die guten Echtheitseigenschaften der Baumwollfärbungen des erfindungsgemäßen Farbstoffes des Beispieles 3 (vgl. Anwendungsbeispiel 4) und der Polyesterfärbungen des bekannten Dispersionsfarbstoffes.

Anwendunsbeispiel 4

Man bereitet ein Färbebad aus 59 Teilen Wasser, 1 Teil der erfindungsgemäßen Disazoverbindung des Beispieles 3, 50 Teilen wasserfreiem Natriumsulfat und 5 Teilen Phosphorsäure und stellt das Bad mit Natriumcarbonat auf einen pH-Wert von 4,5 ein. Sodann gibt man 50 Teile eines Baumwollgewebes hinein und führt die Färbung in geschlossener Apparatur unter ständiger Bewegung bei einer Färbetemperatur von 140°C während 30 Minuten durch. Anschließend nimmt man das gefärbte Gewebe heraus und stellt es durch Spülen mit heißem und kaltem Wasser, durch kochende Behandlung während 15 Minuten in einem wäßrigen, eine geringe Menge an einem nichtionogenen Waschmittel enthaltenden Bad, durch erneutes Spülen mit Wasser und Trocknen fertig.

Man erhält ein intensiv marineblau gefärbtes Baumwollgewebe mit sehr guten Echtheitseigenschaften, wie insbesondere einer guten Lichtechtheit auf trockenem und feuchtem Gewebe, guten Schweißlichtechtheiten und guten Schweißechtheiten. Bei Einsatz unterschiedlicher Farbstoffmengen zeigt die erfindungsgemäße Disazoverbindung einen guten Farbaufbau.

**Patentansprüche für die Vertragsstaaten: BE, CH, DE, FR, GB, IT, LT**

1. Eine wasserlösliche Azoverbindung, die der allgemeinen Formel (1)

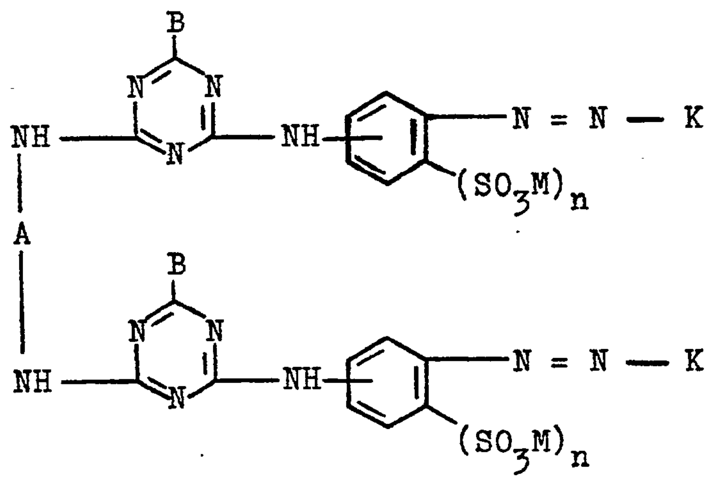

(1)

entspricht, in welcher bedeuten:
A ist ein Phenylenrest, der durch 1 oder 2 Substituenten aus der Gruppe Alkoxy von 1 bis 4 C-Atomen, Alkyl von 1 bis 4 C-Atomen, Chlor, Sulfo und Carboxy substituiert sein kann, oder
A ist ein Rest der allgemeinen Formel (2)

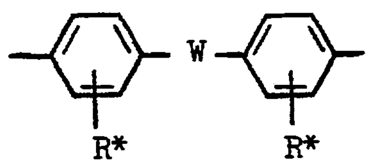

(2)

in welcher
W eine direkte Bindung oder der Vinylidenrest der Formel -CH=CH- oder der bivalente Harnstoffrest der Formel -NH-CO-NH- ist und
R* jedes ein Wasserstoffatom, eine Sulfo-, Carboxy-, Methyl, Ethyl-, Methoxy- oder Ethoxygruppe bedeutet;
B ist ein Pyridiniumrest der allgemeinen Formel (3)

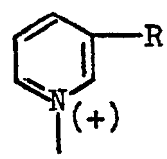

(3)

in welcher
R die Carboxygruppe oder die Carbonamidgruppe ist;
n steht für die Zahl Null oder 1;
M ist ein Wasserstoffatom oder ein Alkalimetall;
K ist ein Rest der allgemeinen Formel (4), (5), (6), (7) oder (8)

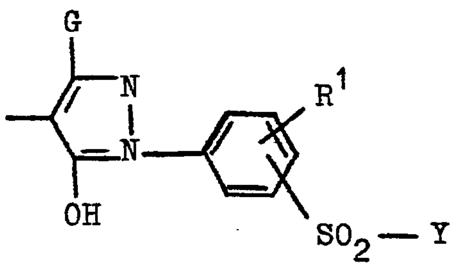

(4)

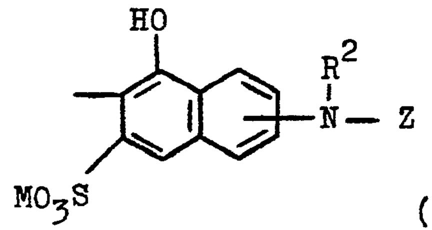

(5)

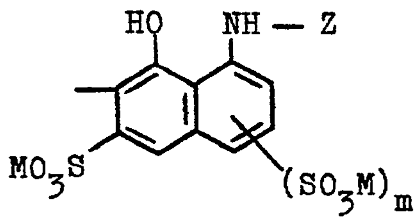

(6)

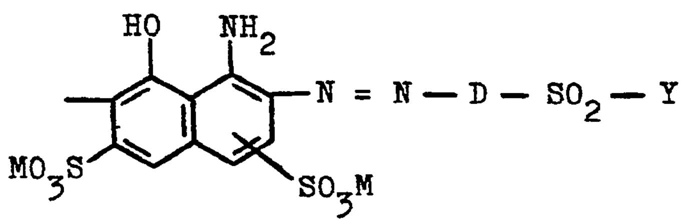

(7)

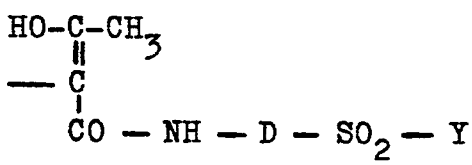

(8)

in welchen bedeuten:

D ist ein Phenylenrest, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann, oder ist ein Naphthylenrest, der durch 1 oder 2 Sulfogruppen substituiert sein kann;

$R^1$ ist ein Wasserstoffatom, ein Chloratom, eine Alkylgruppe von 1 bis 4 C-Atomen oder eine Alkoxygruppe von 1 bis 4 C-Atomen;

$R^2$ ist ein Wasserstoffatom oder ein Alkylgruppe von 1 bis 4 C-Atomen;

G is eine Carboxy-, Methyl- oder Carbalkoxygruppe von 2 bis 5 C-Atomen;

Y ist eine Vinyl-, β-Sulfatoethyl- oder β-Chlorethyl-Gruppe;

M hat die obengenannte Bedeutung;

m steht für die Zahl Null oder 1;

die eine Gruppe $-SO_3M$ in Formel (6) steht in meta-oder para-Stellung zur Gruppe -NH-Z gebunden;

Z ist der α- oder β-Brom-acryloyl-Rest oder der β-Chlor-propionyl-, β-Chlorethylsulfonyl-benzoyl- oder (β-Chlorethylsulfonyl-methyl)-benzoyl-Rest oder ein Rest der allgemeinen Formel (9)

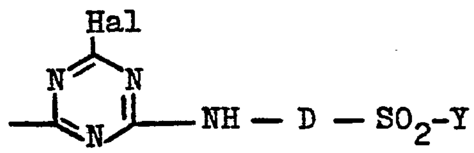 (9)

in welcher D und Y die obengenannten Bedeutungen haben und Hal ein Chlor- oder Fluoratom bedeutet; eine der Sulfo-, Sulfato- und Carboxygruppen bildet ein zum Pyridiniumkation äquivalentes Anion.

2. Azoverbindung nach Anspruch 1, dadurch gekennzeichnet, daß A ein para-Phenylenrest oder ein durch eine Sulfogruppe substituierter para-Phenylenrest ist oder den 2,2'- oder 3,3'-Disulfodiphen-4,4'-ylen-Rest oder einen Rest der Formel (10a), (10b) oder (10c)

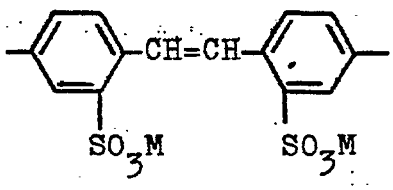 (10a) , 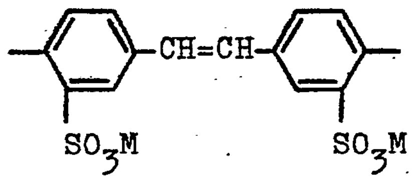 (10b)

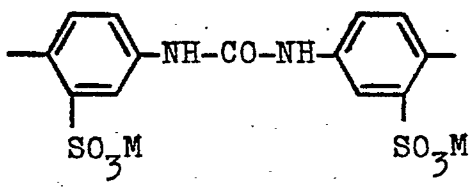 (10c)

in welchen M die in Anspruch 1 genannte Bedeutung besitzt, bedeutet.

3. Verbindung nach Anspruch 1 oder 2, dadurch gekennzeichnet, daß Y eine β-Sulfatoethyl-Gruppe ist.

4. Verfahren zur Herstellung einer in Anspruch 1 genannten und definierten Verbindung der allgemeinen Formel (1), dadurch gekennzeichnet, daß man

a) eine aromatische Aminoverbindung der allgemeinen Formel (12)

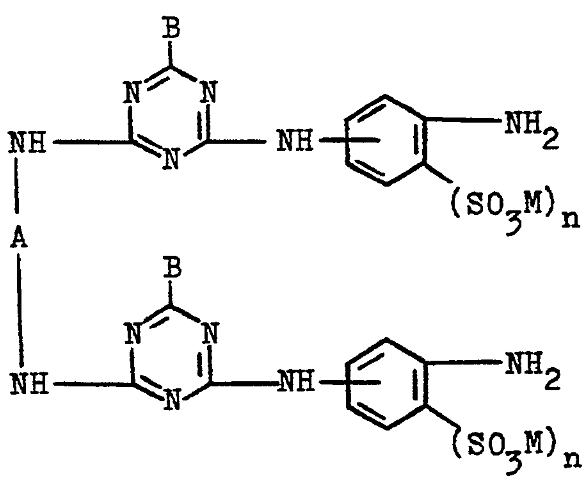 (12)

in welcher A, B, M und n die in Anspruch 1 genannten Bedeutungen haben, zweifach diazotiert (tetrazotiert) und mit einer Kupplungskomponente der allgemeinen Formel (13)

H — K(13)

in welcher K die in Anspruch 1 genannte Bedeutung besitzt, oder mit zwei verschiedenen Kupplungskomponenten der allgemeinen Formel (13) in äquivalenter Menge kuppelt, oder

b) daß man eine Azoverbindung der allgemeinen Formel (14)

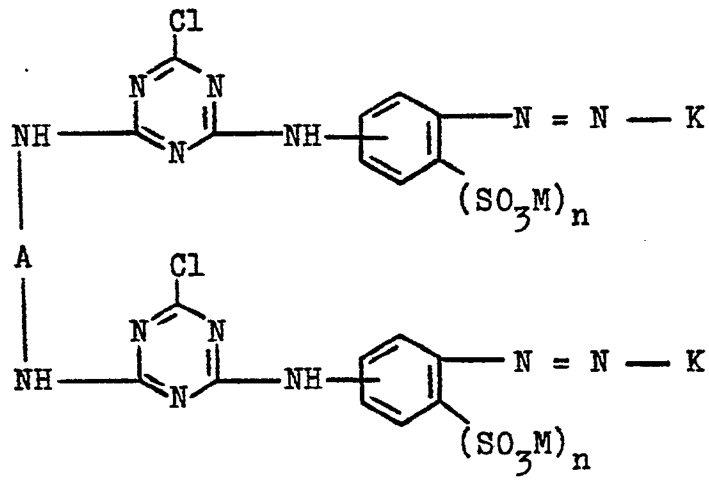

(14)

in welcher A, K, M und n die in Anspruch 1 genannten Bedeutungen haben, mit Nicotinsäure oder Nicotinsäureamid umsetzt.

5. Verwendung einer in Anspruch 1 genannten und definierten Verbindung der allgemeinen Formel (1) als Farbstoff.

6. Verwendung nach Anspruch 5 zum Färben von hydroxy-und/oder carbonamidgruppenhaltigem Material, vorzugsweise Fasermaterial.

7. Verwendung nach Anspruch 6, dadurch gekennzeichnet, daß das Fasermaterial ein Cellulosefaser-Polyesterfaser-Gemisch oder ein Cellulosefaser-Celluloseacetatfaser-Gemisch ist.

8. Verfahren zum Färben (einschließlich Bedrucken) von hydroxy- und/oder carbonamidgruppenhaltigen Material, vorzugsweise Fasermaterial, bei welchem man einen Farbstoff auf das Material aus wäßriger Lösung aufbringt und ihn mittels Wärme und/oder mit Hilfe eines alkalisch wirkenden Mittels fixiert, dadurch gekennzeichnet, daß man als Farbstoff eine Verbindung von Anspruch 1 einsetzt.

9. Verfahren zum Färben von hydroxygruppenhaltigem Fasermaterial, vorzugsweise Cellulosefasermaterial, dadurch gekennzeichnet, daß man eine Verbindung von Anspruch 1 auf das Material in wäßriger Lösung aufbringt und sie aus der wäßrigen Lösung bei einem pH-Wert zwischen 4 und 8 und bei einer Temperatur zwischen 100 und 150°C auf das Material einwirken läßt und auf dem Material fixiert.

10. Verfahren nach Anspruch 9, dadurch gekennzeichent, daß man bei einem pH-Wert zwischen 5 und 7,5 färbt.

11. Verfahren nach Anspruch 9 oder 10, dadurch gekennzeichnet, daß man als Fasermaterial ein Cellulosefaser-Polyesterfaser-Gemisch oder ein Cellulosefaser-Cellulosetriacetatfaser-Gemisch einsetzt.

12. Verfahren nach Anspruch 11, dadurch gekennzeichnet, daß man zusätzlich einen Dispersionsfarbstoff einsetzt.

Patentansprüche für den Vertragsstaat: ES

1. Verfahren zur Herstellung einer wasserlöslichen Azoverbindung, die der allgemeinen Formel (1)

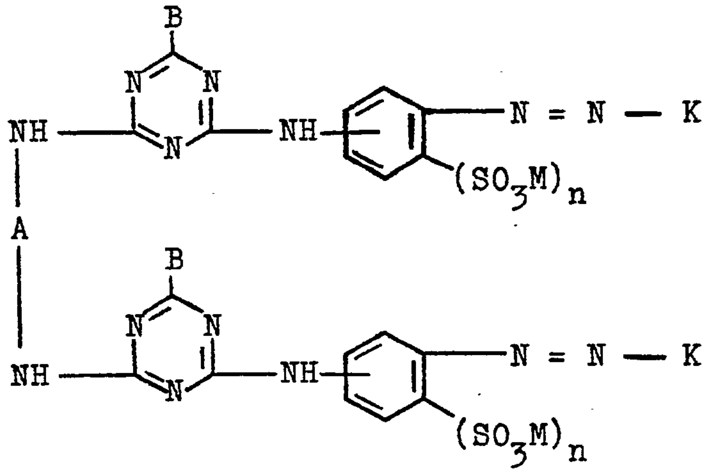

(1)

entspricht, in welcher bedeuten:
A ist ein Phenylenrest, der durch 1 oder 2 Substituenten aus der Gruppe Alkoxy von 1 bis 4 C-Atomen, Alkyl von 1 bis 4 C-Atomen, Chlor, Sulfo und Carboxy substituiert sein kann, oder
A ist ein Rest der allgemeinen Formel (2)

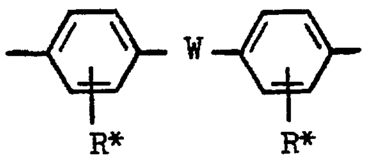

(2)

in welcher
W eine direkte Bindung oder der Vinylidenrest der Formel -CH=CH- oder der bivalente Harnstoffrest der Formel -NH-CO-NH- ist und
R* jedes ein Wasserstoffatom, eine Sulfo-, Carboxy-, Methyl, Ethyl-, Methoxy- oder Ethoxygruppe bedeutet;
B ist ein Pyridiniumrest der allgemeinen Formel (3)

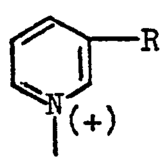

(3)

in welcher
R die Carboxygruppe oder die Carbonamidgruppe ist;
n steht für die Zahl Null oder 1;
M ist ein Wasserstoffatom oder ein Alkalimetall;
K ist ein Rest der allgemeinen Formel (4), (5), (6), (7) oder (8)

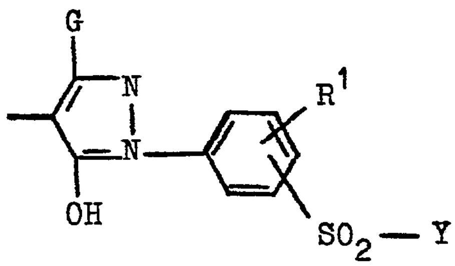

(4)

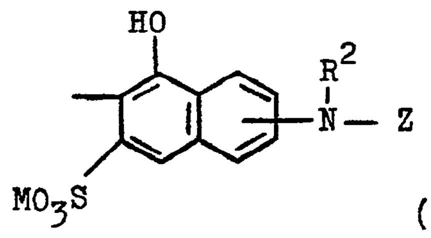

(5)

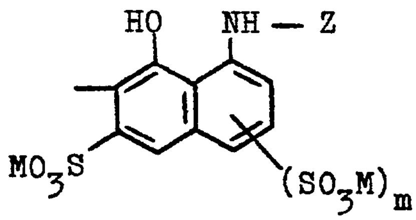

(6)

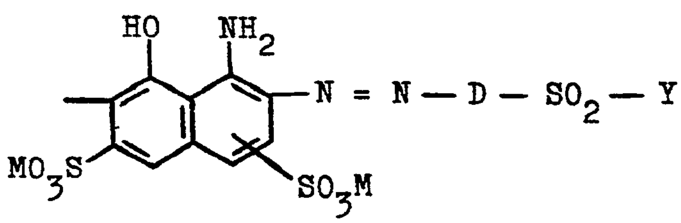

(7)

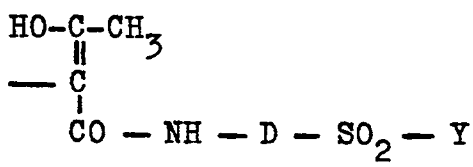

(8)

in welchen bedeuten:

D ist ein Phenylenrest, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann, oder ist ein Naphthylenrest, der durch 1 oder 2 Sulfogruppen substituiert sein kann;

$R^1$ ist ein Wasserstoffatom, ein Chloratom, eine Alkylgruppe von 1 bis 4 C-Atomen oder eine Alkoxygruppe von 1 bis 4 C-Atomen;

$R^2$ ist ein Wasserstoffatom oder eine Alkylgruppe von 1 bis 4 C-Atomen;

G is eine Carboxy-, Methyl- oder Carbalkoxygruppe von 2 bis 5 C-Atomen;

Y ist eine Vinyl-, β-Sulfatoethyl- oder β-Chlorethyl-Gruppe;

M hat die obengenannte Bedeutung;

m steht für die Zahl Null oder 1;

die eine Gruppe $-SO_3M$ in Formel (6) steht in meta-oder para-Stellung zur Gruppe -NH-Z gebunden;

Z ist der α- oder β-Brom-acryloyl-Rest oder der β-Chlor-propionyl-, β-Chlorethylsulfonyl-benzoyl- oder (β-Chlorethylsulfonyl-methyl)-benzoyl-Rest oder ein Rest der allgemeinen Formel (9)

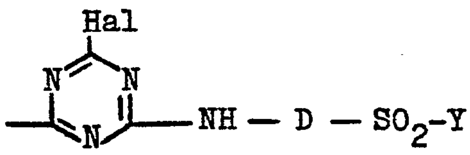

(9)

in welcher D und Y die obengenannten Bedeutungen haben und Hal ein Chlor- oder Fluoratom bedeutet; eine der Sulfo-, Sulfato- und Carboxygruppen bildet ein zum Pyridiniumkation äquivalentes Anion, dadurch gekennzeichnet, daß man

a) eine aromatische Aminoverbindung der allgemeinen Formel (12)

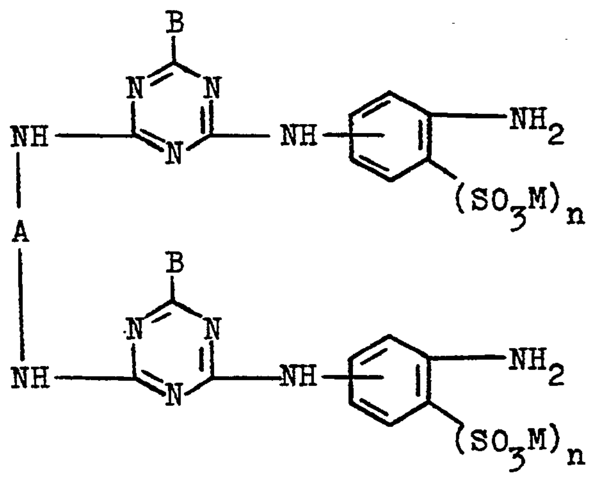

(12)

in welcher A, B, M und n die oben genannten Bedeutungen haben, zweifach diazotiert (tetrazotiert) und mit einer Kupplungskomponente der allgemeinen Formel (13)

H — K(13)

in welcher K die oben genannte Bedeutung besitzt, oder mit zwei verschiedenen Kupplungskomponenten der allgemeinen Formel (13) in äquivalenter Menge kuppelt, oder

b) daß man eine Azoverbindung der allgemeinen Formel (14)

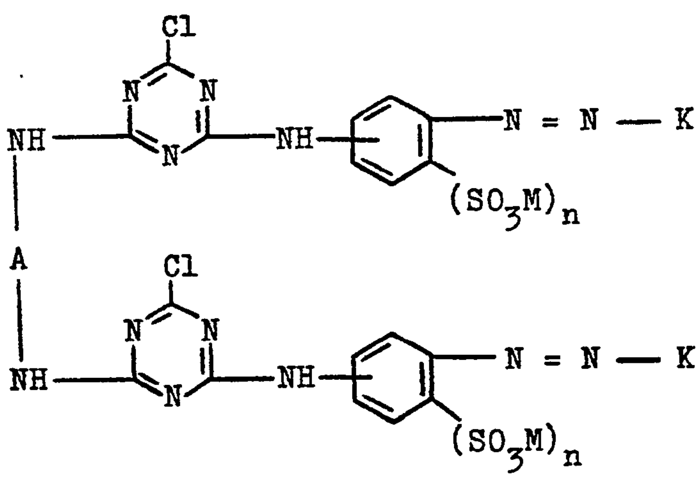

(14)

in welcher A, K, M und n die oben genannten Bedeutungen haben, mit Nicotinsäure oder Nicotinsäureamid umsetzt.

2. Verfahren nach Anspruch 1, dadurch gekennzeichnet, daß A ein para-Phenylenrest oder ein durch eine Sulfogruppe substituierter para-Phenylenrest ist oder den 2,2'-oder 3,3'-Disulfo-diphen-4,4'-ylen-Rest oder einen Rest der Formel (10a), (10b) oder (10c)

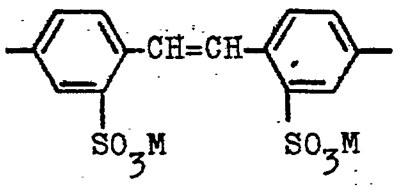 (10a) 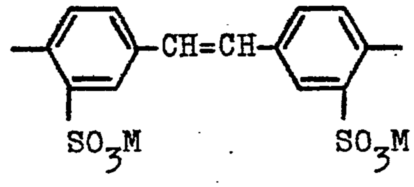 (10b)

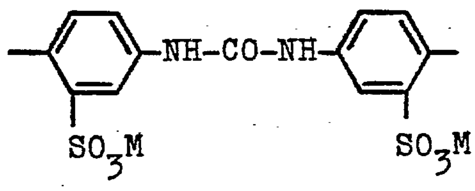 (10c)

in welchen M die in Anspruch 1 genannte Bedeutung besitzt, bedeutet.

3. Verfahren nach Anspruch 1 oder 2, dadurch gekennzeichnet, daß Y eine β-Sulfatoethyl-Gruppe ist.

4. Verwendung einer in Anspruch 1 genannten und definierten oder einer gemäß Anspruch 1 hergestellten Verbindung der allgemeinen Formel (1) als Farbstoff.

5. Verwendung nach Anpsruch 4 zum Färben von hydroxy-und/oder carbonamidgruppenhaltigem Material, vorzugsweise Fasermaterial.

6. Verwendung nach Anspruch 5, dadurch gekennzeichnet, daß das Fasermaterial ein Cellulosefaser-PolyesterfaserGemisch oder ein Cellulosefaser-Celluloseacetatfaser-Gemisch ist.

7. Verfahren zu Färben (einschließlich Bedrucken) von hydroxy- und/oder carbonamidgruppenhaltigem Material, vorzugsweise Fasermaterial, bei welchem man einen Farbstoff auf das Material aus wäßriger Lösung aufbringt und ihn mittels Wärme und/oder mit Hilfe eines alkalisch wirkenden Mittels fixiert, dadurch gekennzeichnet, daß man als Farbstoffe eine in Anspruch 1 genannte und definierte oder eine nach Anspruch 1 genannte und definierte oder eine nach Anspruch 1 hergestellte Verbindung der Formel (1) einsetzt.

8. Verfahren zum Färben von hydroxygruppenhaltigem Fasermaterial, vorzugsweise Cellulosefasermaterial, dadurch gekennzeichnet, daß man eine in Anspruch 1 genannte und definierte oder eine nach Anspruch 1 hergestellte Verbindung der Formel (1) auf das Material in wäßriger Lösung aufbringt und sie aus der wäßrigen Lösung bei einem pH-Wert zwischen 4 und 8 und bei einer Temperatur zwischen 100 und 150°C auf das Material einwirken läßt und auf dem Material fixiert.

9. Verfahren nach Anspruch 8, dadurch gekennzeichnet, daß man bei einem pH-Wert zwischen 5 und 7,5 färbt.

10. Verfahren nach Anspruch 8 oder 9, dadurch gekennzeichnet, daß man als Fasermaterial ein Cellulosefaser-Polyesterfaser-Gemisch oder ein Cellulosefaser-Cellulosetriacetatfaser-Gemisch einsetzt.

11. Verfahren nach Anspruch 10, dadurch gekennzeichnet, daß man zusätzlich einen Dispersionsfarbstoff einsetzt.

**Claims for the Contracting States ES**

1. A process for preparing a water-soluble azo compound which conforms to the general formula (1)

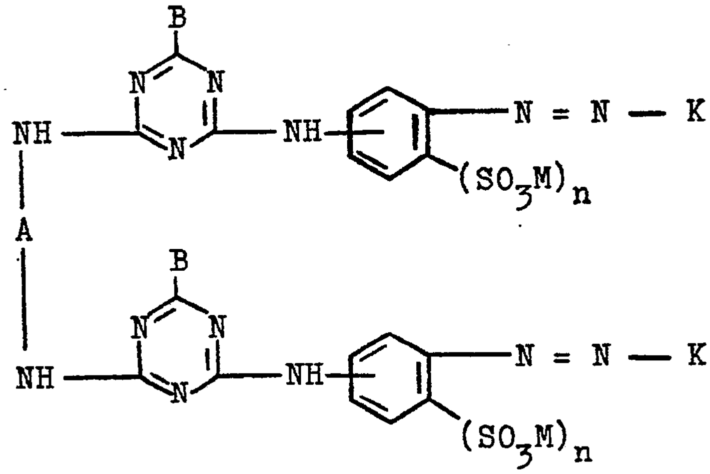

(1)

in which

A is a phenylene radical which can be substituted by 1 or 2 substituents from the group consisting of alkoxy of 1 to 4 carbon atoms, alkyl of 1 to 4 carbon atoms, chlorine, sulfo and carboxyl, or

A is a radical of the general formula (2)

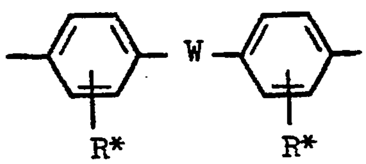

(2)

in which

W is a direct bond or a vinylidene radical of the formula –CH=CH– or a bivalent urea radical of the formula –NH–CO–NH– and

R* in both instances denotes a hydrogen atom or a sulfo, carboxyl, methyl, ethyl, methoxy or ethoxy group;

B is a pyridinium radical of the general formula (3)

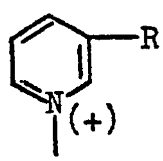

(3)

in which

R is a carboxyl group or carboxamido group;

n stands for the number zero or 1;

M is a hydrogen atom or an alkali metal;

K is a radical of the general formula (4), (5), (6), (7) or (8)

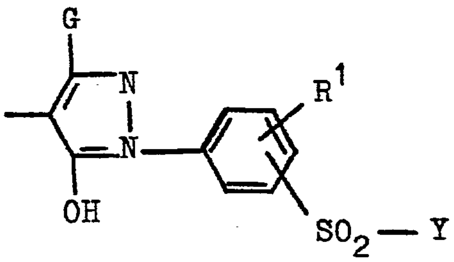
(4)

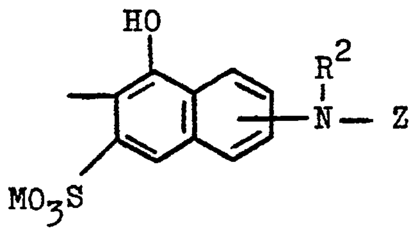
(5)

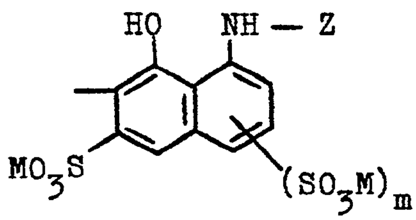
(6)

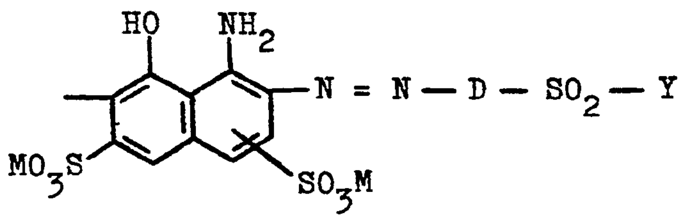
(7)

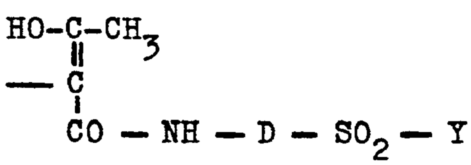
(8)

in which
D is a phenylene radical which can be subtituted by 1 or 2 substituents from the group consisting of chlorine, bromine, alkyl of 1 to 4 carbon atoms, alkoxy of 1 to 4 carbon atoms, carboxyl and sulfo, or is a naphthylene radical which can be substituted by 1 or 2 sulfo groups;
$R^1$ is a hydrogen atom, a chlorine atom, an alkyl group of 1 to 4 carbon atoms or an alkoxy group of 1 to 4 carbon atoms;
$R^2$ is a hydrogen atom or an alkyl group of 1 to 4 carbon atoms;
G is a carboxyl, methyl or carbalkoxy group of 2 to 5 carbon atoms;
Y is a vinyl, β-sulfatoethyl of β-chloroethyl group;
M has the abovementioned meaning;
m stands for the number zero or 1;
the $-SO_3M$ group in the formula (6) is bonded in the meta- or para-position relative to the –NH–Z group;
Z is an α- or β-bromoacryloyl radical or a β-chloropropionyl, β-chloroethylsulfonylbenzoyl or (β-chloroethylsulfonylmethyl)-benzoyl radical or a radical of the general formula (9)

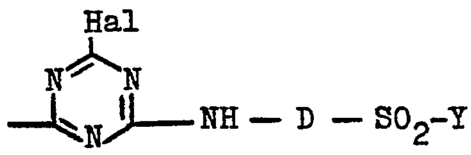

(9)

in which D and Y have the abovementioned meanings and Hal denotes a chlorine or fluorine atom;
one of the sulfo, sulfato and carboxyl groups forms an anion equivalent to the pyridinium cation, which comprises
a) doubly diazotizing (tetrazotizing) an aromatic amino compound of the general formula (12)

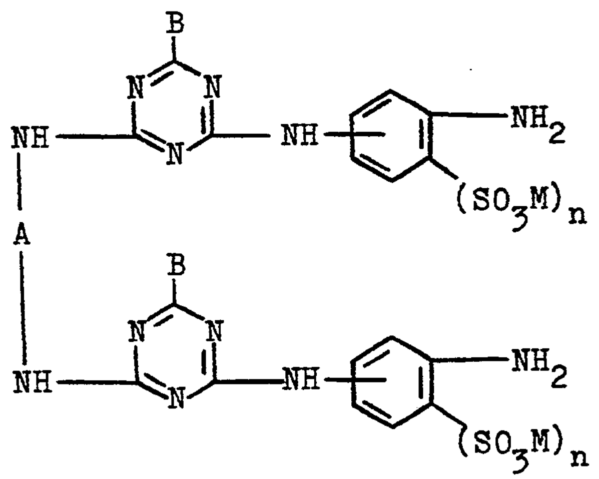

(12)

in which A, B, M and n have the meanings mentioned above, and coupling with a coupling component of the general formula (13)
H – K (13)
in which K has the meaning mentioned above, or with two different coupling components of the general formula (13) in an equivalent amount, or
b) reacting an azo compound of the general formula (14)

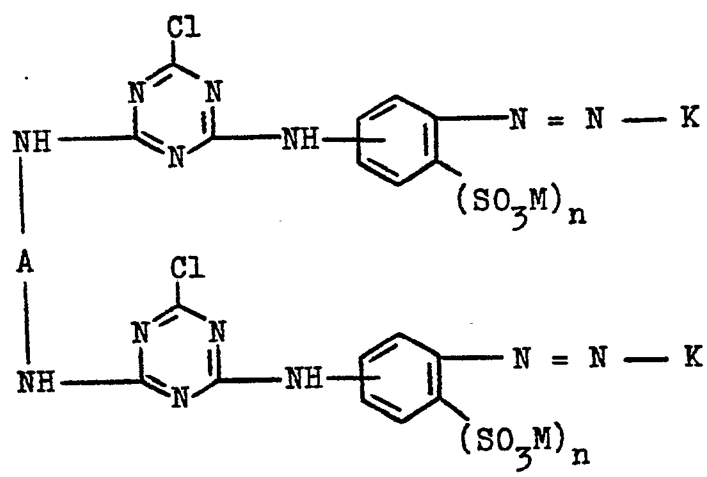

(14)

in which A, K, M and n have the meanings mentioned above, with nicotinic acid or nicotinamide.

2. The process as claimed in claim 1, wherein A is a paraphenylene radical or a sulfo-substituted paraphenylene radical or denotes a 2,2'- or 3,3'-disulfodiphen-4,4'-ylene radical of a radical of the formula (10a), (10b) or (10c)

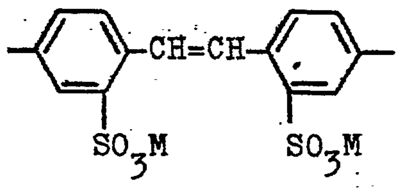 (10a) 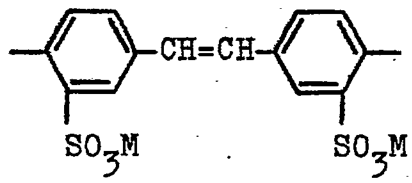 (10b)

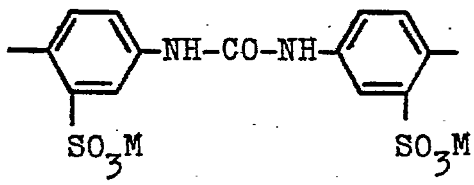 (10c)

in which M has the meaning mentioned in claim 1.

3. The process as claimed in claim 1 or 2, wherein Y is a β-sulfatoethyl group.

4. Use of a compound mentioned and defined in claim 1 or prepared as defined in claim 1, of the general formula (1) as a dye.

5. Use as claimed in claim 4, for dyeing hydroxyl- and/or carboxamido-containing material, preferably fiber material.

6. Use as claimed in claim 5, wherein the fiber material is a cellulose fiber/polyester fiber blend or a cellulose fiber/cellulose acetate fiber blend.

7. A process for dyeing (including printing) hydroxyl- and/or carboxamido-containing material, preferably fiber material, where a dye is applied to the material from an aqueous solution and fixed by means of heat and/or by means of an alkaline agent, which comprises using a compound mentioned and defined in claim 1 or prepared as defined in claim 1, of the formula (1), as the dye.

8. A process for dyeing hydroxyl-containing fiber material, preferably cellulose fiber material, wherein a compound mentioned and defined in claim 1 or prepared as defined in claim 1, of the formula (1), is applied to the material in an aqueous solution and allowed to act on the material from the aqueous solution at a pH value between 4 and 8 and at a temperature between 100 and 150°C and fixed on the material.

9. The process as claimed in claim 8, wherein the dyeing is carried out at a pH value between 5 and 7.5.

10. The process as claimed in claim 8 or 9, wherein the fiber material used is a cellulose fiber/polyester fiber blend or a cellulose fiber/cellulose triacetate fiber blend.

11. The process as claimed in claim 10, wherein a disperse dye is additionally used.

**Claims for the Contracting States BE, CH, DE, FR, GB, IT, LI**

1. A water-soluble azo compound which conforms to the general formula (1)

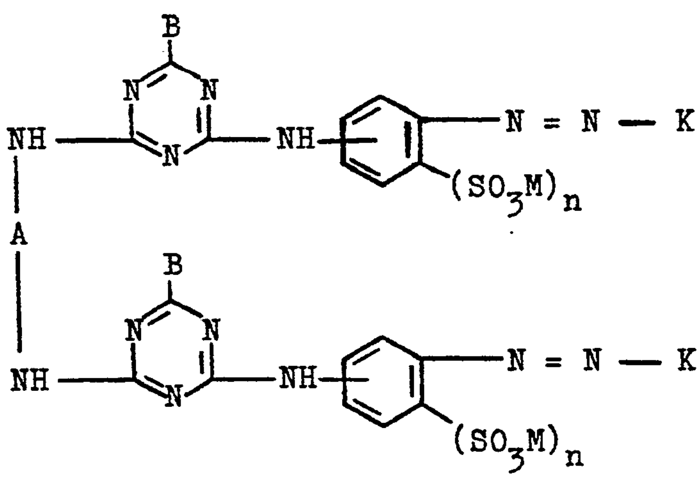 (1)

in which
A is a phenylene radical which can be substituted by 1 or 2 substituents from the group consisting of alkoxy of 1 to 4 carbon atoms, alkyl of 1 to 4 carbon atoms, chlorine, sulfo and carboxyl, or
A is a radical of the general formula (2)

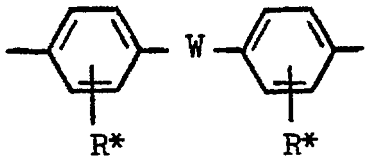

(2)

in which
W is a direct bond or a vinylidene radical of the formula –CH=CH– or a bivalent urea radical of the formula –NH–CO–NH– and
R* in both instances denotes a hydrogen atom or a sulfo, carboxyl, methyl, ethyl, methoxy or ethoxy group;
B is pyridinium radical of the general formula (3)

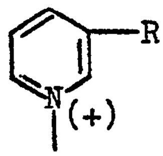

(3)

in which
R is a carboxyl group or carboxamido group;
n stands for the number zero or 1;
M is a hydrogen atom or an alkali metal;
K is a radical of the general formula (4), (5), (6), (7) or (8)

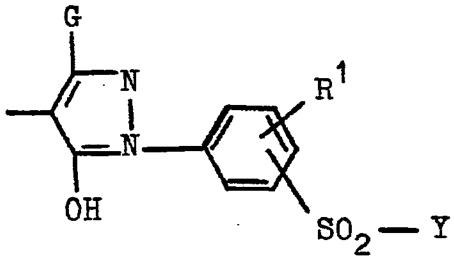

(4)

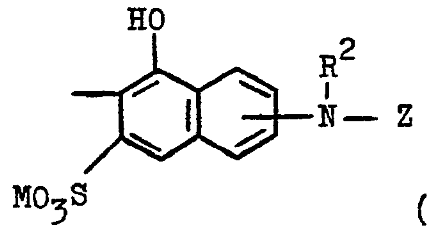

(5)

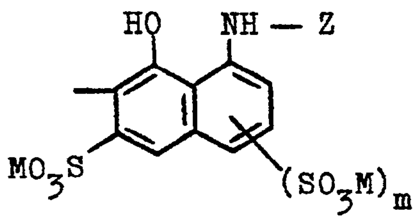

(6)

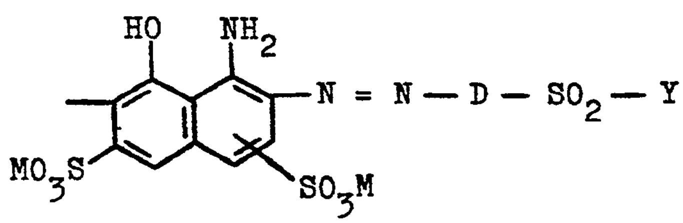

(7)

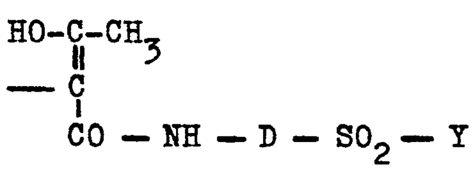

(8)

in which

D is a phenylene radical which can be substituted by 1 or 2 substituents from the group consisting of chlorine, bromine, alkyl of 1 to 4 carbon atoms, alkoxy of 1 to 4 carbon atoms, carboxyl and sulfo, or is a naphthylene radical which can be substituted by 1 or 2 sulfo groups;

$R^1$ is a hydrogen atom, a chlorine atom, an alkyl group of 1 to 4 carbon atoms or an alkoxy group of 1 to 4 carbon atoms;

$R^2$ is a hydrogen atom or an alkyl group of 1 to 4 carbon atoms;

G is carboxyl, methyl or carbalkoxy group of 2 to 5 carbon atoms;

Y is a vinyl, β-sulfatoethyl or β-chloroethyl group;

M has the abovementioned meaning;

m stands for the number zero or 1;

the $-SO_3M$ group in the formula (6) is bonded in the meta- or para-position relativ to the –NH–Z group;

Z is an α- or β-bromoacryloyl radical or a β-chloropropionyl, β-chloroethylsulfonylbenzoyl or (β-chloroethylsulfonylmethyl)-benzoyl radical or a radical of the general formula (9)

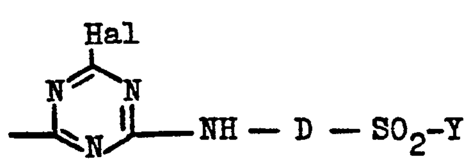

(9)

in which D and Y have the abovementioned meanings and Hal denotes a chlorine or fluorine atom; one of the sulfo, sulfato and carboxyl groups forms an anion equivalent to the pyridinium cation.

2. An azo compound as claimed in claim 1, wherein A is a para-phenylene radical or a sulfo-substituted paraphenylene radical or denotes a 2,2′- or 3,3′-disulfodiphen-4,4′-ylene radical or a radical of the formula (10a), (10b) or (10c)

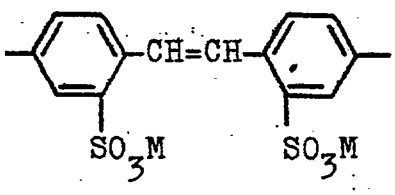 (10a) 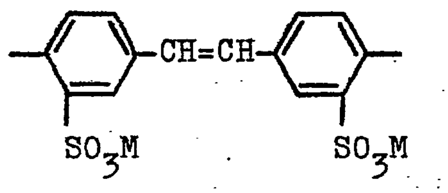 (10b)

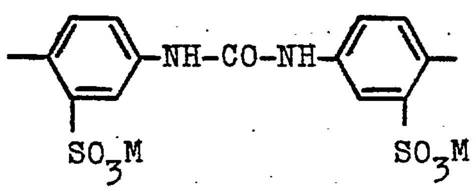 (10c)

in which M has the meaning mentioned in claim 1.

3. A compound as claimed in claim 1 or 2, wherein Y is a β-sulfatoethyl group.

4. A process for preparing a compound mentioned and defined in claim 1, of the general formula (1), which comprises

a) doubly diazotizing (tetrazotizing) an aromatic amino compound of the general formula (12)

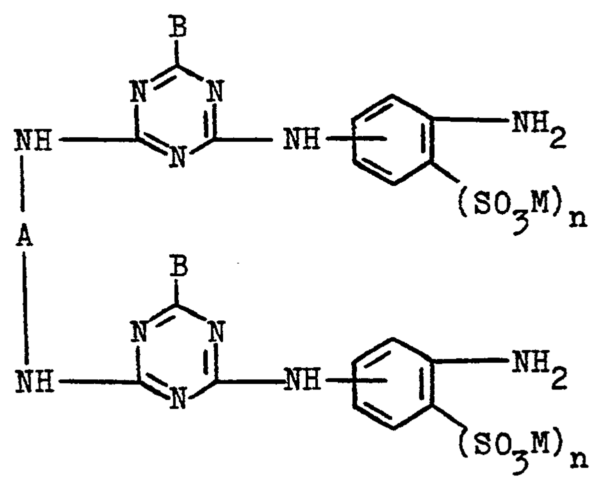 (12)

in which A, B, M and n have the meanings mentioned in claim 1, and coupling with a coupling component of the general formula (13)

H−K (13)

in which K has the meaning mentioned in claim 1, or with two different coupling components of the general formula (13) in an equivalent amount, or

b) reacting an azo compound of the general formula (14)

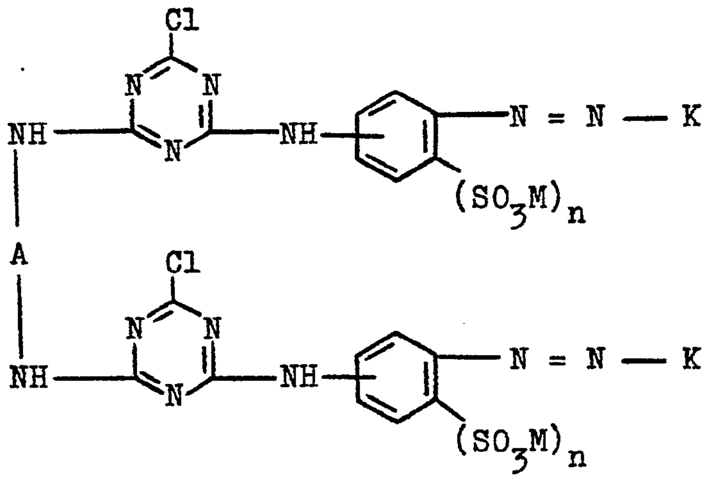

(14)

in which A, K, M and n have the meanings mentioned in claim 1, with nicotinic acid or nicotinamide.

5. Use of a compound mentioned and defined in claim 1, of the general formula (1) as a dye.

6. Use as claimed in claim 5, for dyeing hydroxyl- and/or carboxamido-containing material, preferably fiber material.

7. Use as claimed in claim 6, wherein the fiber material is a cellulose fiber/polyester fiber blend or a cellulose fiber/cellulose acetate fiber blend.

8. A process for dyeing (including printing) hydroxyl- and/or carboxamido-containing material, preferably fiber material, where a dye is applied to the material from an aqueous solution and fixed by means of heat and/or by means of an alkaline agent, which comprises using a compound of claim 1 as the dye.

9. A process for dyeing hydroxyl-containing fiber material, preferably cellulose fiber material, wherein a compound of claim 1 is applied to the material in an aqueous solution and allowed to act on the material from the aqueous solution at a pH value between 4 and 8 and at a temperature between 100 and 150°C and fixed on the material.

10. The process as claimed in claim 9, wherein the dyeing is carried out at a pH value between 5 and 7.5.

11. The process as claimed in claim 9 or 10, wherein the fiber material used is a cellulose fiber/polyester fiber blend or a cellulose fiber/cellulose triacetate fiber blend.

12. The process as claimed in claim 11, wherein a disperse dye is additionally used.

**Revendications pour l'Etat Contractant: ES**

1. Procédé pour préparer un composé azoïque hydrosoluble, qui répond à la formule générale (1):

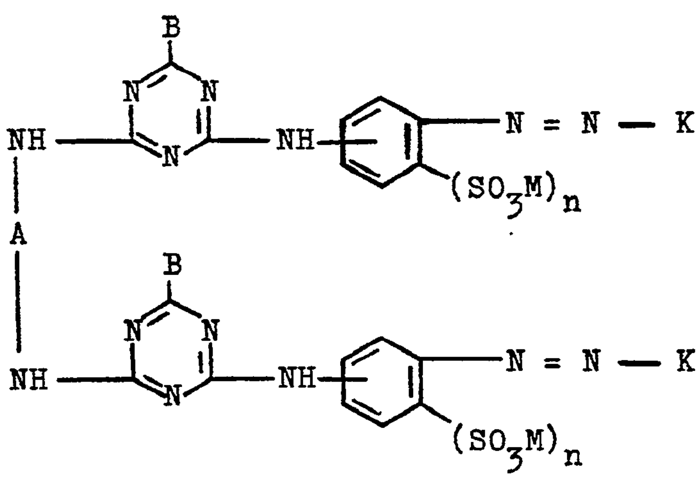

(1)

dans laquelle:

A représente un reste phénylène, qui peut être substitué par un ou deux substituants choisis parmi un groupe alcoxy ayant 1 à 4 atomes de carbone, un groupe alkyle ayant 1 à 4 atomes de carbone, un atome de chlore, un groupe sulfo et un groupe carboxy, ou bien

A représente un reste de formule générale (2):

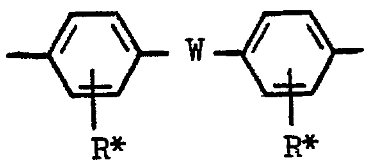

(2)

dans laquelle:
W est un liaison directe ou représente le reste vinylidène de formule –CH=CH– ou le reste urée bivalent de formule –NH–CO–NH, et
chaque R* représente un atome d'hydrogène, un groupe sulfo, carboxy, méthyle, éthyle, méthoxy ou éthoxy;
B représente un reste pyridinium de formule générale (3):

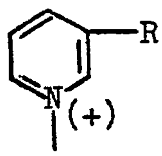

(3)

dans laquelle:
R représente le groupe carboxy ou le groupe carboxamide;
n est un nombre nul ou valant 1;
M représente un atome d'hydrogène ou un métal alcalin;
K représente un reste de formule générale (4), (5), (6), (7) et (8):

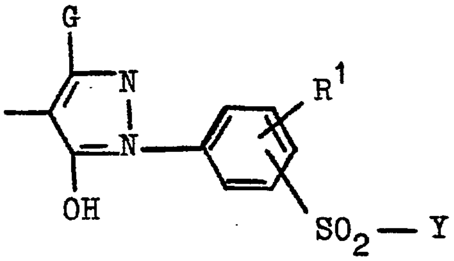

(4)

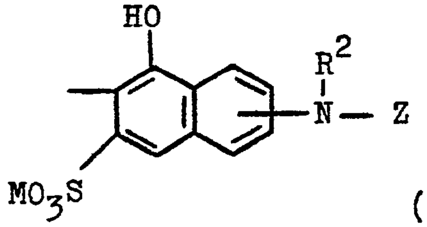

(5)

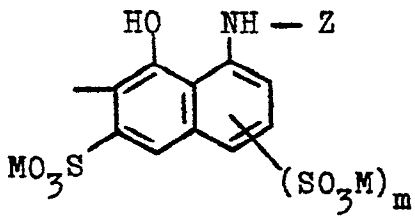

(6)

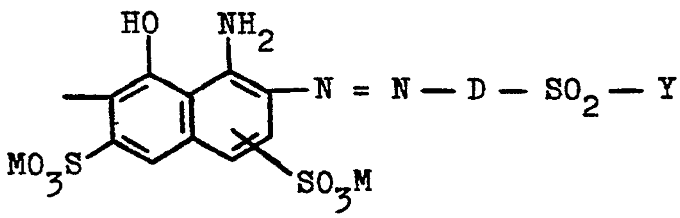

(7)

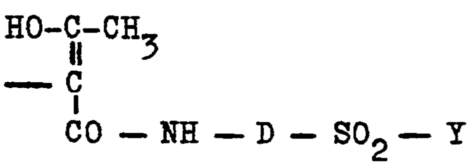

(8)

dans lesquelles:

D représente un reste phénylène, qui peut être substitué par un ou deux substituants choisis parmi un atome de chlore et de brome, un groupe alkyle ayant 1 à 4 atomes de carbone, un groupe alcoxy ayant 1 à 4 atomes de carbone, un groupe carboxy et sulfo, ou bien D représente un reste naphtylène, qui peut être substitué par un ou deux groupes sulfo;

$R^1$ représente un atome d'hydrogène, un atome de chlore, un groupe alkyle ayant 1 à 4 atomes de carbone ou un groupe alcoxy ayant 1 à 4 atomes de carbone;

$R^2$ représente un atome d'hydrogène ou un groupe alkyle ayant 1 à 4 atomes de carbone;

G représente un groupe carboxy, méthyle ou carbalcoxy ayant 2 à 5 atomes de carbone;

Y représente un groupe vinyle, sulfato-2 éthyle ou chloro-2 éthyle;

M a le sens précité;

m est un nombre nul ou valant 1;

le groupe $-SO_3M$ est relié, dans la formule (6) en position méta ou para par rapport au groupe –NH–Z;

Z représente le reste bromo-1 ou bromo-2 acryloyle ou le reste chloro-2 propionyle, chloro-2 éthylsulfonylbenzoyle, ou (chloro-2 éthylsulfonyl-méthyl)-benzoyle ou un reste de formule générale (9):

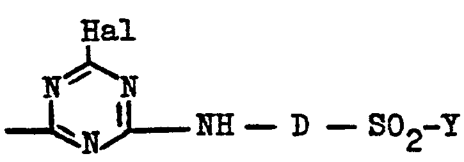

(9)

dans laquelle D et Y ont les sens précités, et Hal représente un atome de chlore ou un atome de fluor; l'un des groupes sulfo, sulfato et carboxy forme un anion équivalant au cation pyridinium, procédé caractérisé en ce que:

a) on diazote deux fois (on tétrazote) une amine aromatique de formule générale (12):

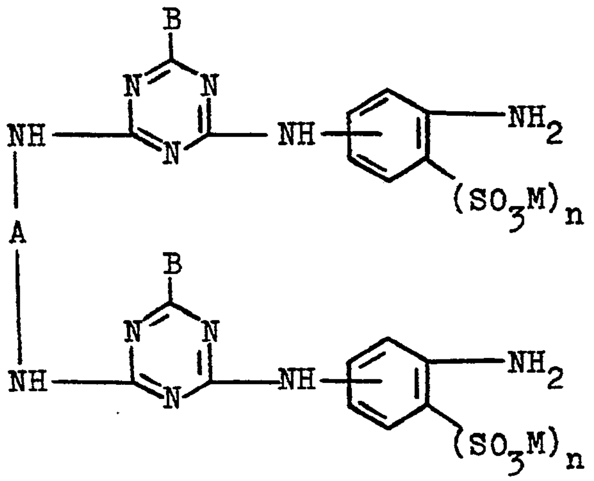

(12)

(dans laquelle A, B, M et n ont les sens indiqués précédemment) et l'on copule avec un copulant de formule générale (13):

H – K (13)

(dans laquelle K a le sens indiqué précédemment) ou bien l'on copule en quantité équivalente avec deux copulants différents répondant chacun à la formule générale (13) ou bien

b) on fait réagir un composé azoïque de formule générale (14):

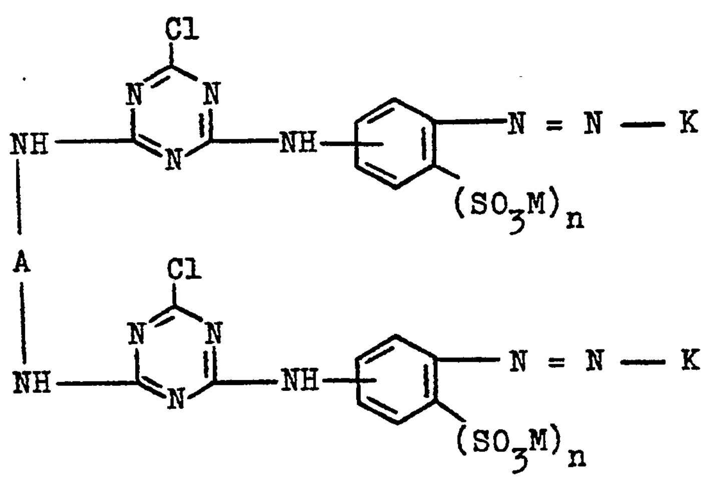

(14)

(dans laquelle A, K, M et n ont les sens indiqués précédemment) avec l'acide nicotinique ou avec un amide d'acide nicotinique.

2. Procédé selon la revendication 1, charactérisé en ce que A représente un reste para-phenylene ou un reste paraphénylène substitué par un groupe sulfo, ou bien le reste disulfo-2,2′ ou -3,3′ diphénylène-4,4′ ou un reste de formule (10a), (10b) ou (10c):

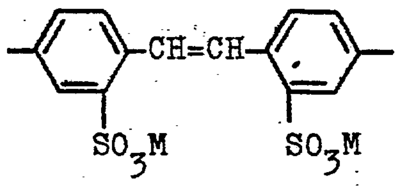 (10a) 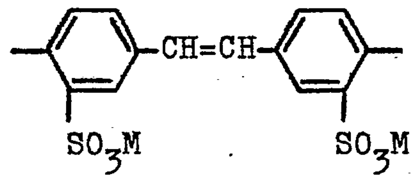 (10b)

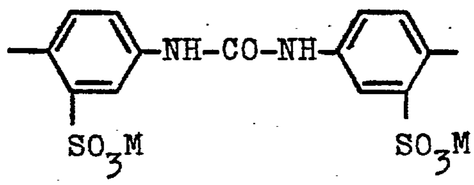 (10c)

dans lesquelles M a le sens indiqué à la revendication 1.

3. Procédé selon la revendication 1 ou 2, caractérisé en ce que Y représente un groupe sulfato-2 éthyle.

4. Utilisation d'un composé de formule générale (1), cité et défini à la revendication 1, et d'un composé préparé selon la revendication 1, à titre de colorant.

5. Utilisation selon la revendication 4 pour teindre de la matière contenant des groupes hydroxy et/ou carboxamides, avantageusement de la matière fibreuse.

6. Utilisation selon la revendication 5, caractérisée en ce que la matière fibreuse est un mélange de fibres de cellulose et de fibres de polyester ou est un mélange de fibres de cellulose et de fibres d'acétate de cellulose.

7. Procédé pour teindre (ce qui comprend l'impression) de la matière contenant des groupes hydroxy et/ou carboxamides, avantageusement de la matière fibreuse, dans lequel on applique sur la matière un colorant en solution aqueuse et on le fixe à l'aide de la chaleur et/ou à l'aide d'un agent à action alcaline, procédé caractérisé en ce qu'on utilise comme colorant un composé de formule (1) cité et défini à la revendication 1 ou un tel composé préparé selon la revendication 1.

8. Procédé pour teindre de la matière fibreuse contenant des groupes hydroxy, avantageusement de la matière en fibres de cellulose, procédé caractérisé en ce qu'on applique en solution aqueuse sur la matière un composé de formule (1) cité et défini à la revendication 1 ou préparé selon la revendication 1, on le fait agir sur la matière en solution aqueuse à un pH compris entre 4 et 8 et à une température comprise entre 100 et 150°C et on le fixe sur la matière.

9. Procédé selon la revendication 8, caractérisé en ce qu'on teint à un pH compris entre 5 et 7,5.

10. Procédé selon la revendication 8 ou 9, caractérisé en ce qu'on utilise comme matière fibreuse un mélange de fibres de cellulose et de fibres de polyester ou un mélange de fibres de cellulose et de fibres de triacétate de cellulose.

11. Procédé selon la revendication 10, caractérisé en ce qu'on utilise en outre un colorant en dispersion.

**Revendications Pour les Etats Contractants: BE, CH, DE, FR, GB, IT, LI**

1. Composé azoïque hydrosoluble, qui répond à la formule générale (1):

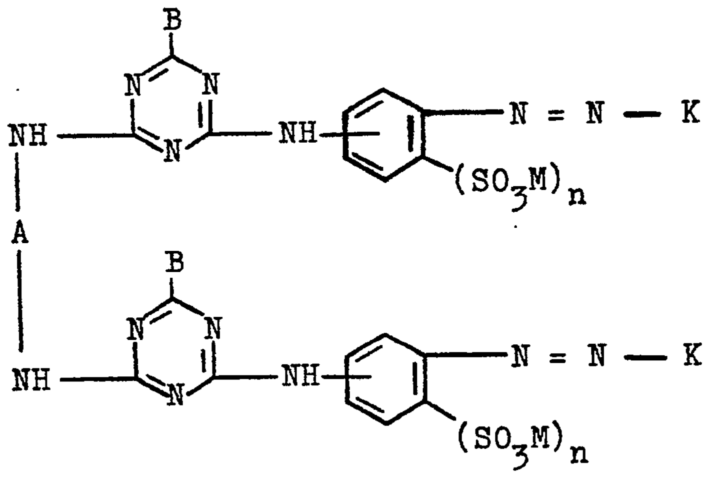

(1)

dans laquelle:
A représente un reste phénylène, qui peut être substitué par un ou deux substituants choisis parmi un groupe alcoxy ayant 1 à 4 atomes de carbone, un groupe alkyle ayant 1 à 4 atomes de carbone, un atome de chlore, un groupe sulfo et un groupe carboxy, ou bien
A représente un reste de formule générale (2):

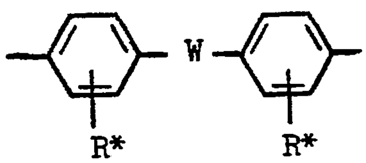

(2)

dans laquelle:
W est une liaison directe ou représente le reste vinylidène de formule –CH=CH– ou le reste urée bivalent de formule –NH–CO–NH–, et
chaque R* représente un atome d'hydrogène, un groupe sulfo, carboxy, méthyle, éthyle, méthoxy ou éthoxy;
B représente un reste pyridinium de formule générale (3):

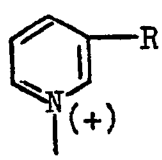

(3)

dans laquelle:
R représente le groupe carboxy ou le groupe carboxamide;
n est un nombre nul ou valant 1;
M représente un atome d'hydrogène ou un métal alcalin;
K représente un reste de formule générale (4), (5), (6), (7) et (8):

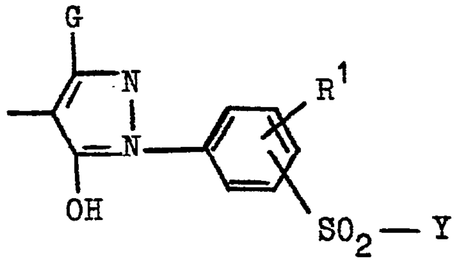
(4)

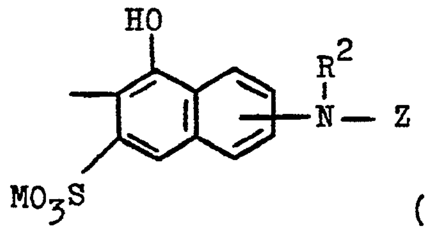
(5)

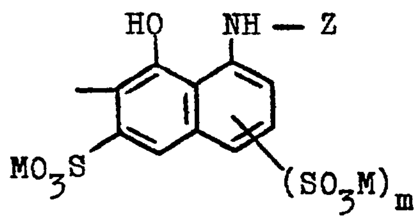
(6)

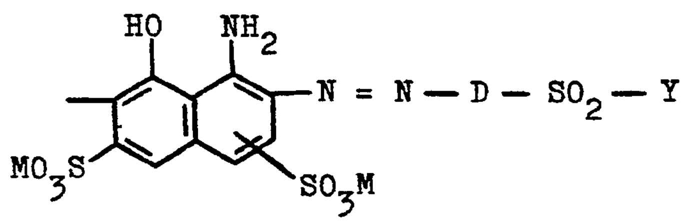
(7)

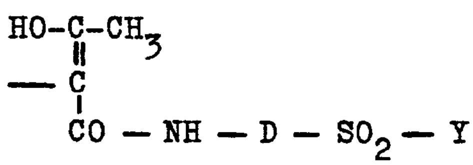
(8)

dans lesquelles:
D représente un reste phénylène, qui peut être substitué par un ou deux substituants choisis parmi un atome de chlore et de brome, un groupe alkyle ayant 1 à 4 atomes de carbone, un groupe alcoxy ayant 1 à 4 atomes de carbone, un groupe carboxy et sulfo, ou bien D représente un reste naphtylène, qui peut être substitué par un ou deux groupes sulfo;
$R^1$ représente un atome d'hydrogène, un atome de chlore, un groupe alkyle ayant 1 à 4 atomes de carbone ou un groupe alcoxy ayant 1 à 4 atomes de carbone;
$R^2$ représente un atome d'hydrogène ou un groupe alkyle ayant 1 à 4 atomes de carbone;
G représente un groupe carboxy, méthyle ou carbalcoxy ayant 2 à 5 atomes de carbone;
Y représente un groupe vinyle, sulfato-2 éthyle ou chloro-2 éthyle;
M a le sens précité;
m est un nombre nul ou valant 1;
le groupe $-SO_3M$ est relié, dans la formule (6) en position méta ou para par rapport au groupe –NH–Z;
Z représente le reste bromo-1 ou bromo-2 acryloyle ou le reste chloro-2 propionyle, chloro-2 éthylsulfonylbenzoyle, ou (chloro-2 éthylsulfonyl-méthyl)benzoyle ou un reste de formule générale (9):

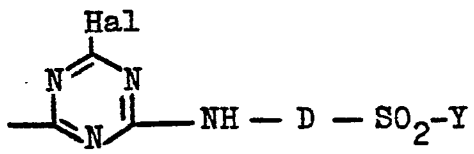

(9)

dans laquelle D et Y ont les sens précités, et Hal représente un atome de chlore ou un atome de fluor; l'un des groupes sulfo, sulfato et carboxy forme un anion équivalant au cation pyridinium.

2. Composé azoïque selon la revendication 1, caractérisé en ce que A représente un reste para-phénylène ou un reste paraphénylène substitué par un groupe sulfo, ou bien le reste disulfo-2,2′ ou -3,3′ diphénylène-4,4′ ou un reste de formule (10a), (10b) ou (10c):

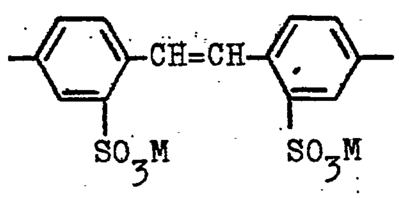

(10a)

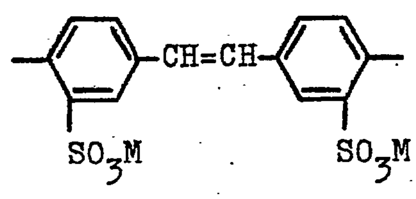

(10b)

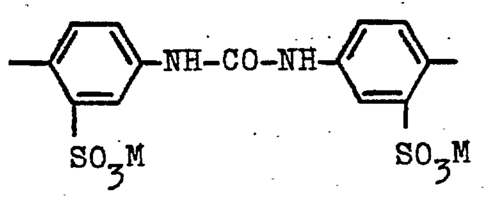

(10c)

dans lesquelles M a le sens indiqué à la revendication 1.

3. Composé selon la revendication 1 ou 2, caractérisé en ce que Y représente un groupe sulfato-2 éthyle.

4. Procédé pour préparer l'un des composés cités et définis à la revendication 1, de formule générale (1), procédé caractérisé en ce que:

a) on diazote deux fois (on tétrazote) une amine aromatique de formule générale (12):

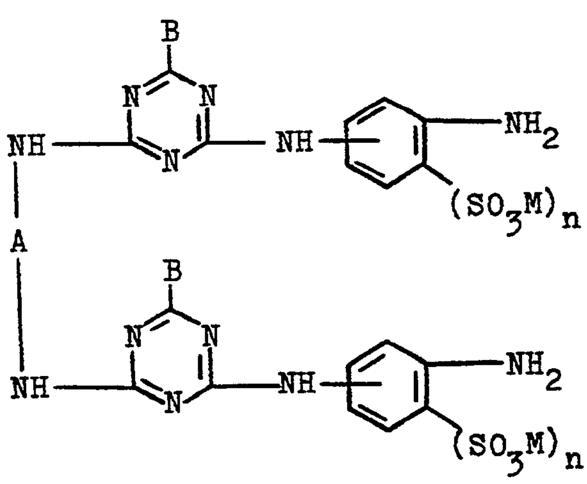

(12)

(dans laquelle A, B, M et n ont les sens indiqués à la revendication 1) et l'on copule avec un copulant de formule générale (13):

H – K (13)

(dans laquelle K a le sens indiqué à la revendication 1) ou bien l'on copule en quantité équivalente avec deux copulants différents répondant chacun un la formule générale (13) ou bien

b) on fait réagir un composé azoïque de formule générale (14):

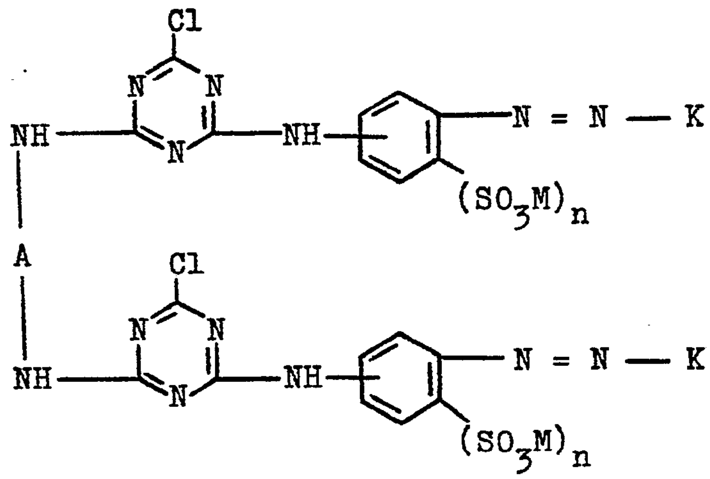

(14)

(dans laquelle A, K, M et n ont les sens indiqués à la revendication 1) avec l'acide nicotinique ou avec un amide d'acide nicotinique.

5. Utilisation d'un composé de formule générale (1), cité et défini à la revendication 1, à titre de colorant.

6. Utilisation selon la revendication 5 pour teindre une matière contenant des groupes hydroxy et/ou carboxamides, de préférence une matière fibreuse.

7. Utilisation selon la revendication 6, caractérisée en ce que la matière fibreuse est un mélange de fibres de cellulose et de fibres de polyester ou est un mélange de fibres de cellulose et de fibres d'acétate de cellulose.

8. Procédé pour teindre (ce qui comprend l'impression) de la matière contenant des groupes hydroxy et/ou carboxamides, avantageusement une matière fibreuse, dans lequel on applique sur la matière un colorant en solution aqueuse et l'on fixe ce colorant à l'aide de la chaleur et/ou à l'aide d'un agent à action alcaline, procédé caractérisé en ce qu'on utilise comme colorant un composé selon la revendication 1.

9. Procédé pour teindre de la matière fibreuse contenant des groupes hydroxy, avantageusement de la matière à fibres cellulosiques, procédé caractérisé en ce qu'on applique en solution aqueuse un composé selon la revendication 1 sur la matière et l'on fait agir ce composé, à partir de la solution aqueuse, à un pH compris entre 4 et 8 et à une température comprise entre 100 et 150°C sur la matière et l'on fixe ce composé sur la matière.

10. Procédé selon la revendicaiton 9, caractérisé en ce qu'on teint à un pH compris entre 5 et 7,5.

11. Procédé selon la revendication 9 ou 10, caractérisé en ce qu'on utilise comme matière fibreuse un mélange de fibres de cellulose et de fibres de polyester ou un mélange de fibres de cellulose et de fibres de triacétate de cellulose.

12. Procédé selon la revendication 11, caractérisé en ce qu'on utilise en outre un colorant en dispersion.